# EUROPEAN PATENT APPLICATION

(11) **EP 4 138 374 A1**
(43) Date of publication of application: **22.02.2023**
(21) Application number: 22754276.8
(22) Date of filing: 06.05.2022
(51) Int. Cl.: H04M 1/67, G06K 9/00

(54) **FINGERPRINT ENTRY METHOD AND ELECTRONIC DEVICE**

(30) Priority: 08.07.2021 CN 202110773226
(71) Applicant: Honor Device Co., Ltd., Shenzhen, Guangdong 518040 (CN)
(72) Inventor: XU, Donghui, Shenzhen, Guangdong 518040 (CN)
(74) Representative: Gill Jennings & Every LLP
(86) International application number: PCT/CN2022/091258
(87) International publication number: WO 2023/279830

(57) **Abstract**

This application provides a fingerprint input method and an electronic device. The method includes: acquiring, by an electronic device, fingerprint information corresponding to a fingerprint of a first part of a finger, and then displaying a fingerprint pattern of a first region in a fingerprint display region to indicate that the fingerprint of the first part of the finger has been inputted. After that, the electronic device acquires fingerprint information corresponding to a fingerprint of a second part of the finger, and then displays a fingerprint pattern of a second region in the fingerprint display region to indicate that the fingerprint of the second part of the finger has been inputted. The electronic device may register a fingerprint of the finger based on a plurality of pieces of fingerprint information acquired. This application provides a fingerprint input method, so as to enrich display manners of fingerprint input and improve user experience.

## Description

### CROSS-REFERENCE TO RELATED APPLICATIONS

This application claims priority to Chinese Patent Application No. 202110773226.5, filed with the China National Intellectual Property Administration on July 8, 2021 and entitled "FINGERPRINT INPUT METHOD AND ELECTRONIC DEVICE", which is incorporated herein by reference in its entirety.

### TECHNICAL FIELD

This application relates to the field of terminal devices, and in particular, to a fingerprint input method and an electronic device.

### BACKGROUND

Currently, a terminal device may be unlocked by, but not limited to, a fingerprint, password, or face. In a scenario where the terminal device is unlocked by a fingerprint, a user needs to input the fingerprint in advance to unlock a mobile phone if a fingerprint of a finger used to unlock the mobile phone matches the fingerprint that has been recorded. A current fingerprint input process generally involves changing, by the terminal device, colors of lines in a fingerprint input interface as a fingerprint is inputted, which is relatively single.

### SUMMARY

To solve the above problems, this application provides a fingerprint input method and an electronic device. In the method, an electronic device can display a corresponding fingerprint pattern in a fingerprint display region based on an inputted fingerprint to provide a user with a fingerprint input method, so that the user can determine the inputted fingerprint based on the displayed fingerprint pattern. Moreover, display manners of fingerprint input can be enriched, and user experience can be improved.

In a first aspect, this application provides an electronic device. The electronic device includes: one or more processors, a memory, and a fingerprint sensor; and one or more computer programs, where the one or more computer programs are stored on the memory, and the computer programs, when executed by the one or more processors, cause the electronic device to perform the following steps: displaying, by the electronic device, a new fingerprint interface in response to a first user operation received; acquiring, by the electronic device, first fingerprint information in a case that a first part of a finger detected by the fingerprint sensor overlies a fingerprint sensing region; displaying, by the electronic device, a fingerprint pattern of a first region in a fingerprint display region according to the first fingerprint information to indicate that a fingerprint of the first part of the finger has been inputted; acquiring, by the electronic device, second fingerprint information in a case that a second part of the finger detected by the sensor overlies the fingerprint sensing region; the first fingerprint information being different from the second fingerprint information; displaying, by the electronic device, a fingerprint pattern of a second region in the fingerprint display region according to the second fingerprint information to indicate that a fingerprint of the second part of the finger has been inputted, where the first region is different from the second region; and registering, by the electronic device, a fingerprint of the finger based on the first fingerprint information and the second fingerprint information. In this way, during fingerprint input, the electronic device can display a corresponding fingerprint pattern in the fingerprint display region based on the acquired fingerprint to indicate the inputted fingerprint corresponding to the part of the finger through the displayed fingerprint pattern. Thus, display manners of fingerprint input are enriched, and user experience is improved.

Exemplarily, the electronic device may further acquire third fingerprint information in a case that a third part of the finger detected by the sensor overlies the fingerprint sensing region; the third fingerprint information being different from the first fingerprint information, and the third fingerprint information being different from the second fingerprint information. The electronic device displays a fingerprint pattern of a third region in the fingerprint display region according to the third fingerprint information to indicate that a fingerprint of the third part of the finger has been inputted. The electronic device may register a fingerprint of the finger based on the first fingerprint information, the second fingerprint information, and the third fingerprint information.

Exemplarily, based on the inputted fingerprint, the electronic device may unlock the electronic device, and perform operations such as make a payment. For example, during the unlocking of the electronic device, an identified fingerprint may be matched with one or more inputted fingerprints, and the electronic device can be unlocked after the matching is successful.

According to the first aspect, a display screen of the electronic device includes one or more fingerprint sensing regions. Exemplarily, the display screen of the electronic device may include one fingerprint sensing region. Exemplarily, the display screen of the electronic device may include a plurality of fingerprint sensing regions. Exemplarily, the plurality of fingerprint sensing regions may be distributed at different positions of the screen.

According to the first aspect or any one of the above implementations in the first aspect, the new fingerprint interface includes images of the one or more fingerprint sensing regions. Exemplarily, the electronic device may display an image of a fingerprint sensing region in the new fingerprint interface to indicate a position of the fingerprint sensing region.

According to the first aspect or any one of the above implementations in the first aspect, a size of the fingerprint sensing region is smaller than or equal to that of a display screen of the electronic device. Exemplarily, the size of the fingerprint sensing region may be equal to the size of the display screen of the electronic device. That is, a user may press any position of the screen to input a fingerprint.

According to the first aspect or any one of the above implementations in the first aspect, during the displaying a new fingerprint interface, the computer programs, when executed by the one or more processors, cause the electronic device to perform the following step: displaying an image of the fingerprint display region in the new fingerprint interface. Exemplarily, a size of the image of the fingerprint display region is smaller than that of the new fingerprint interface. Exemplarily, when a mobile phone displays the new fingerprint interface, the image of the fingerprint display region is displayed in the new fingerprint interface. The image of the fingerprint display region does not include any fingerprint pattern.

According to the first aspect or any one of the above implementations in the first aspect, after the acquiring second fingerprint information in a case that a second part of the finger detected by the sensor overlies the fingerprint sensing region, the computer programs, when executed by the one or more processors, cause the electronic device to perform the following step: displaying an image of the fingerprint display region in the new fingerprint interface, and displaying the fingerprint pattern of the first region in the image of the fingerprint display region. Exemplarily, the electronic device may display the image of the fingerprint display region and display the corresponding fingerprint pattern in the image of the fingerprint display region when the first fingerprint information is inputted.

According to the first aspect or any one of the above implementations in the first aspect, the image of the fingerprint display region includes a border. Exemplarily, a color of the border is the same as or different from a background color of the fingerprint display region.

According to the first aspect or any one of the above implementations in the first aspect, the image of the fingerprint display region includes a set background color, the set background color being the same as or different from a background color of the new fingerprint interface. Exemplarily, the background color of the image of the fingerprint display region may be different from the background color of the new fingerprint interface to highlight the image of the fingerprint display region.

According to the first aspect or any one of the above implementations in the first aspect, the image of the fingerprint display region is in a shape of an oval. Exemplarily, the image of the fingerprint display region may also be in a shape of a square or rounded rectangle, which is not limited in this application.

According to the first aspect or any one of the above implementations in the first aspect, the fingerprint sensor is an under-screen fingerprint sensor. Exemplarily, the fingerprint sensor may also be disposed in a side border or on the back of the mobile phone, or under a HOME button.

According to the first aspect or any one of the above implementations in the first aspect, the computer programs, when executed by the one or more processors, cause the electronic device to perform the following steps: displaying a prompt box including a confirm option and a cancel option; and registering the fingerprint of the finger in response to a received operation of tapping the confirm option by a user. In this way, the mobile phone may register the inputted fingerprint of the finger based on a confirmation operation of the user.

According to the first aspect or any one of the above implementations in the first aspect, the computer programs, when executed by the one or more processors, cause the electronic device to perform the following step: saving fingerprint identification information and the fingerprint of the finger correspondingly. Exemplarily, the fingerprint identification information is a default fingerprint name of the mobile phone. Exemplarily, the fingerprint identification information may also be a fingerprint name manually named by the user.

In a second aspect, this application provides an electronic device. The electronic device includes: one or more processors, a memory, and a fingerprint sensor; and one or more computer programs, where the one or more computer programs are stored on the memory, and the computer programs, when executed by the one or more processors, cause the electronic device to perform the following steps: displaying a new fingerprint interface in response to a first user operation received; acquiring first fingerprint information in a case that a first part of a finger detected by the fingerprint sensor overlies a fingerprint sensing region; displaying an image of a fingerprint display region, the image of the fingerprint display region including a fingerprint pattern; changing a background of a first region in the image of the fingerprint display region according to the first fingerprint information to indicate that a fingerprint of the first part of the finger has been inputted; acquiring second fingerprint information in a case that a second part of the finger detected by the sensor overlies the fingerprint sensing region; the first fingerprint information being different from the second fingerprint information; changing a background of a second region in the image of the fingerprint display region according to the second fingerprint information to indicate that a fingerprint of the second part of the finger has been inputted; the first region being different from the second region; and registering a fingerprint of the finger based on the first fingerprint information and the second fingerprint information. In this way, during fingerprint input, the electronic device can change an appearance of the fingerprint display region, that is, a background of the fingerprint display region, in the fingerprint display region based on the acquired fingerprint to indicate the inputted fingerprint corresponding to the part of the finger. Thus, display manners of fingerprint input are enriched, and user experience is improved.

Exemplarily, the changed background color may be the same as or different from the background color of the new fingerprint interface.

According to a second aspect, a display screen of the electronic device includes one or more fingerprint sensing regions.

According to the second aspect or any one of the above implementations in the second aspect, the new fingerprint interface includes images of the one or more fingerprint sensing regions.

According to the second aspect or any one of the above implementations in the second aspect, a size of the fingerprint sensing region is smaller than or equal to that of a display screen of the electronic device.

According to the second aspect or any one of the above implementations in the second aspect, the image of the fingerprint display region includes a border.

According to the second aspect or any one of the above implementations in the second aspect, the image of the fingerprint display region includes a set background color, the set background color being the same as or different from a background color of the new fingerprint interface.

According to the second aspect or any one of the above implementations in the second aspect, the image of the fingerprint display region is in a shape of an oval.

According to the second aspect or any one of the above implementations in the second aspect, the fingerprint sensor is an under-screen fingerprint sensor.

According to the second aspect or any one of the above implementations in the second aspect, the computer programs, when executed by the one or more processors, cause the electronic device to perform the following steps: displaying a prompt box including a confirm option and a cancel option; and registering the fingerprint of the finger in response to a received operation of tapping the confirm option by a user.

According to the second aspect or any one of the above implementations in the second aspect, the computer programs, when executed by the one or more processors, cause the electronic device to perform the following step: saving fingerprint identification information and the fingerprint of the finger correspondingly.

The second aspect and any one of the implementations in the second aspect correspond to the first aspect and any one of the implementations in the first aspect respectively. Technical effects of the second aspect and any one of the implementations in the second aspect may be obtained with reference to the technical effects corresponding to the first aspect and any one of the implementations in the first aspect. Details are not described herein.

In a third aspect, this application provides a fingerprint input method. The method includes: displaying, by an electronic device, a new fingerprint interface in response to a first user operation received; acquiring, by the electronic device, first fingerprint information in a case that a first part of a finger detected by the fingerprint sensor overlies a fingerprint sensing region; displaying, by the electronic device, a fingerprint pattern of a first region in a fingerprint display region according to the first fingerprint information to indicate that a fingerprint of the first part of the finger has been inputted; acquiring, by the electronic device, second fingerprint information in a case that a second part of the finger detected by the sensor overlies the fingerprint sensing region; the first fingerprint information being different from the second fingerprint information; displaying, by the electronic device, a fingerprint pattern of a second region in the fingerprint display region according to the second fingerprint information to indicate that a fingerprint of the second part of the finger has been inputted; the first region being different from the second region; and registering, by the electronic device, a fingerprint of the finger based on the first fingerprint information and the second fingerprint information.

According to the third aspect, a display screen of the electronic device includes one or more fingerprint sensing regions.

According to the third aspect or any one of the above implementations in the third aspect, the new fingerprint interface includes images of the one or more fingerprint sensing regions.

According to the third aspect or any one of the above implementations in the third aspect, a size of the fingerprint sensing region is smaller than or equal to that of a display screen of the electronic device.

According to the third aspect or any one of the above implementations in the third aspect, the displaying a new fingerprint interface includes: displaying an image of the fingerprint display region in the new fingerprint interface.

According to the third aspect or any one of the above implementations in the third aspect, the displaying a fingerprint pattern of a first region in a fingerprint display region according to the first fingerprint information includes: displaying an image of the fingerprint display region in the new fingerprint interface, and displaying the fingerprint pattern of the first region in the image of the fingerprint display region.

According to the third aspect or any one of the above implementations in the third aspect, the image of the fingerprint display region includes a border.

According to the third aspect or any one of the above implementations in the third aspect, the image of the fingerprint display region includes a set background color, the set background color being the same as or different from a background color of the new fingerprint interface.

According to the third aspect or any one of the above implementations in the third aspect, the image of the fingerprint display region is in a shape of an oval.

According to the third aspect or any one of the above implementations in the third aspect, the fingerprint sensor is an under-screen fingerprint sensor.

According to the third aspect or any one of the above implementations in the third aspect, the registering a fingerprint of the finger includes: displaying a prompt box including a confirm option and a cancel option; and registering the fingerprint of the finger in response to a received operation of tapping the confirm option by a user.

According to the third aspect or any one of the above implementations in the third aspect, the registering a fingerprint of the finger includes: saving fingerprint identification information and the fingerprint of the finger correspondingly.

The third aspect and any one of the implementations in the third aspect correspond to the first aspect and any one of the implementations in the first aspect respectively. Technical effects of the third aspect and any one of the implementations in the third aspect may be obtained with reference to the technical effects corresponding to the first aspect and any one of the implementations in the first aspect. Details are not described herein.

In a fourth aspect, this application provides a fingerprint input method, including: displaying, by an electronic device, a new fingerprint interface in response to a first user operation received; acquiring, by the electronic device, first fingerprint information in a case that a first part of a finger detected by the fingerprint sensor overlies a fingerprint sensing region; displaying, by the electronic device, an image of a fingerprint display region, the image of the fingerprint display region including a fingerprint pattern; changing, by the electronic device, a background of a first region in the image of the fingerprint display region according to the first fingerprint information to indicate that a fingerprint of the first part of the finger has been inputted; acquiring, by the electronic device, second fingerprint information in a case that a second part of the finger detected by the sensor overlies the fingerprint sensing region; the first fingerprint information being different from the second fingerprint information; changing, by the electronic device, a background of a second region in the image of the fingerprint display region according to the second fingerprint information to indicate that a fingerprint of the second part of the finger has been inputted; the first region being different from the second region; and registering, by the electronic device, a fingerprint of the finger based on the first fingerprint information and the second fingerprint information.

According to the fourth aspect, a display screen of the electronic device includes one or more fingerprint sensing regions.

According to the fourth aspect or any one of the above implementations in the fourth aspect, the new fingerprint interface includes images of the one or more fingerprint sensing regions.

According to the fourth aspect or any one of the above implementations in the fourth aspect, a size of the fingerprint sensing region is smaller than or equal to that of a display screen of the electronic device.

According to the fourth aspect or any one of the above implementations in the fourth aspect, the image of the fingerprint display region includes a border.

According to the fourth aspect or any one of the above implementations in the fourth aspect, the image of the fingerprint display region includes a set background color, the set background color being the same as or different from a background color of the new fingerprint interface.

According to the fourth aspect or any one of the above implementations in the fourth aspect, the image of the fingerprint display region is in a shape of an oval.

According to the fourth aspect or any one of the above implementations in the fourth aspect, the fingerprint sensor is an under-screen fingerprint sensor.

According to the fourth aspect or any one of the above implementations in the fourth aspect, the registering a fingerprint of the finger includes: displaying a prompt box including a confirm option and a cancel option; and registering the fingerprint of the finger in response to a received operation of tapping the confirm option by a user.

According to the fourth aspect or any one of the above implementations in the fourth aspect, the registering a fingerprint of the finger includes: saving fingerprint identification information and the fingerprint of the finger correspondingly.

The fourth aspect and any one of the implementations in the fourth aspect correspond to the second aspect and any one of the implementations in the second aspect respectively. Technical effects of the fourth aspect and any one of the implementations in the fourth aspect may be obtained with reference to the technical effects corresponding to the second aspect and any one of the implementations in the second aspect. Details are not described herein.

In a fifth aspect, this application provides a computer-readable medium configured to store a computer program. The computer program includes instructions for performing the method according to the third aspect or any possible implementation in the third aspect.

In a sixth aspect, this application provides a computer-readable medium configured to store a computer program. The computer program includes instructions for performing the method according to the fourth aspect or any possible implementation in the fourth aspect.

In a seventh aspect, this application provides a computer program. The computer program includes instructions for performing the method according to the third aspect or any possible implementation in the third aspect.

In an eighth aspect, this application provides a computer program. The computer program includes instructions for performing the method according to the fourth aspect or any possible implementation in the fourth aspect.

In a ninth aspect, this application provides a chip, including a processing circuit, and a transceiver pin. The transceiver pin and the processing circuit communicate with each other through an internal connection path. The processing circuit performs the method according to the third aspect or any possible implementation in the third aspect to control a receive pin to receive a signal to control a transmit pin to transmit the signal.

In a tenth aspect, this application provides a chip, including a processing circuit, and a transceiver pin. The transceiver pin and the processing circuit communicate with each other through an internal connection path. The processing circuit performs the method according to the fourth aspect or any possible implementation in the fourth aspect to control a receive pin to receive a signal and to control a transmit pin to transmit the signal.

### BRIEF DESCRIPTION OF THE DRAWINGS

FIG. 1 is a schematic diagram of a hardware structure of an electronic device;
FIG. 2 shows an example of a schematic diagram of a position of a fingerprint sensor;
FIG. 3 is a schematic diagram of a software structure of the electronic device;
FIG. 4a to FIG. 4e show examples of schematic diagrams of a user interface;
FIG. 5 shows an example of a schematic diagram of the user interface;
FIG. 6a to FIG. 6b show examples of schematic diagrams of the user interface;
FIG. 7 shows an example of a schematic diagram of the user interface;
FIG. 8 shows an example of a schematic diagram of region division;
FIG. 9 shows an example of a schematic diagram of different fingerprint pressing manners;
FIG. 10 shows an example of a schematic diagram of the user interface;
FIG. 11 shows an example of a schematic diagram of the user interface;
FIG. 12 shows an example of a schematic diagram of the user interface;
FIG. 13 shows an example of a schematic diagram of the user interface;
FIG. 14 shows an example of a schematic diagram of the user interface;
FIG. 15 shows an example of a schematic diagram of the user interface;
FIG. 16 shows an example of a schematic diagram of the user interface;
FIG. 17 shows an example of a schematic diagram of the user interface;
FIG. 18 shows an example of a schematic diagram of the user interface;
FIG. 19a to FIG. 19b show examples of schematic diagrams of the user interface;
FIG. 20a to FIG. 20b show examples of schematic diagrams of the user interface;
FIG. 21a to FIG. 21c show examples of schematic diagrams of the user interface;
FIG. 22 shows an example of a schematic diagram of the user interface;
FIG. 23A and FIG. 23B show an example of a schematic diagram of an unlocking scenario;
FIG. 24A and FIG. 24B show an example of a schematic diagram of the unlocking scenario;
FIG. 25 shows an example of a schematic diagram of a payment scenario;
FIG. 26 shows an example of a schematic diagram of the user interface;
FIG. 27 shows an example of a schematic diagram of the user interface;
FIG. 28 shows an example of a schematic diagram of fingerprint input;
FIG. 29a to FIG. 29b show examples of schematic diagrams of the fingerprint input; and
FIG. 30 shows an example of a schematic structural diagram of an apparatus.

### DESCRIPTION OF EMBODIMENTS

The technical solutions in the embodiments of this application are clearly and completely described below with reference to the accompanying drawings in the embodiments of this application. Apparently, the described embodiments are some rather than all of the embodiments of this application. All other embodiments obtained by a person of ordinary skill in the art based on the embodiments of this application without creative efforts shall fall within the protection scope of this application.

The term "and/or" used herein describes only an association relationship for describing associated objects and represents that three relationships may exist. For example, A and/or B may represent the following three cases: Only A exists, both A and B exist, and only B exists.

In the specification and claims in the embodiments of this application, the terms such as "first" and "second" are intended to distinguish between different objects, but do not indicate a particular order of the objects. For example, a first target object and a second target object are intended to distinguish between different target objects, but do not indicate a particular order of the target objects.

In the embodiments of this application, the term such as "exemplarily" or "for example" is used to represent giving an example, an illustration, or a description. Any embodiment or design solution described as an "exemplarily" or "for example" in the embodiments of this application should not be explained as being more preferred or having more advantages than another embodiment or design solution. Exactly, the term such as "exemplarily" or "for example" is intended to present a related concept in a specific manner.

In the description of the embodiments of this application, unless otherwise stated, "a plurality of" means two or more. For example, a plurality of processing units means two or more processing units, and a plurality of systems means two or more systems.

Fingerprint input methods in embodiments of this application may be applied to an electronic device with a fingerprint identification function or provided with a fingerprint sensor. Optionally, the electronic device may be a terminal device such as a mobile phone or a tablet computer, a wearable device such as a smart watch or a smart bracelet, a smart home device such as a refrigerator, a smart door lock or a remote control, or a vehicle-mounted device, which is not limited in this application.

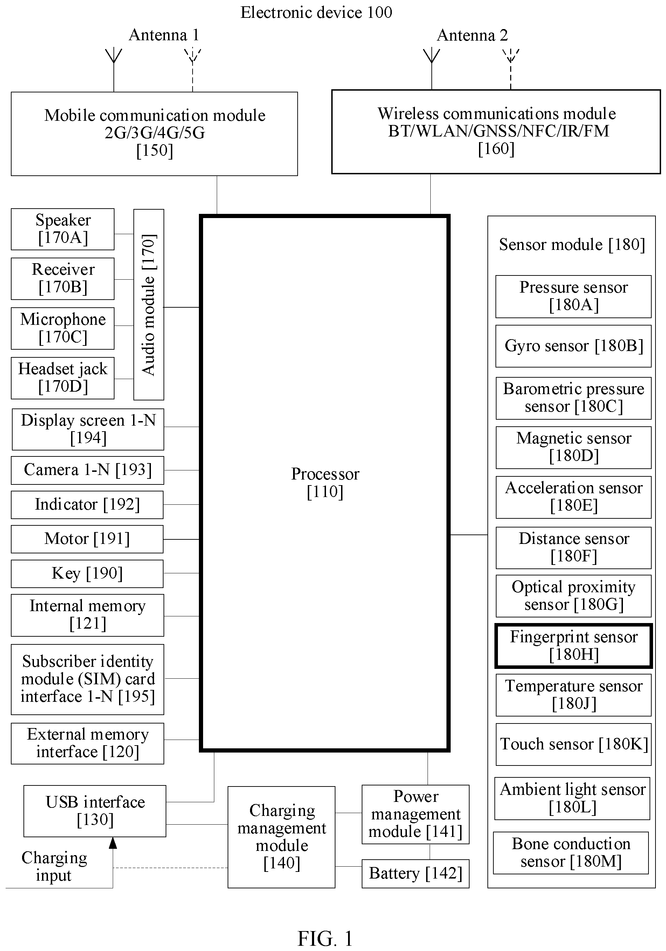

FIG. 1 shows a schematic structural diagram of an electronic device 100. It should be understood that the electronic device 100 shown in FIG. 1 is only an example of the electronic device, and the electronic device 100 may have more or fewer components than those shown in the figure, may combine two or a plurality of components, or may have a different component configuration. The components shown in FIG. 1 may be implemented by hardware that includes one or more signal processors and/or application-specific integrated circuits, software, or a combination of hardware and software.

The electronic device 100 may include a processor 110, an external memory interface 120, an internal memory 121, a universal serial bus (universal serial bus, USB) interface 130, a charging management module 140, a power management unit 141, a battery 142, an antenna 1, an antenna 2, a mobile communication module 150, a wireless communication module 160, an audio module 170, a speaker 170A, a phone receiver 170B, a microphone 170C, a headset jack 170D, a sensor module 180, a key 190, a motor 191, an indicator 192, a camera 193, a display screen 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the electronic device 100. The controller may generate an operating control signal according to an instruction operation code and a sequence signal, to complete control of fetching and executing an instruction.

A memory may be further configured in the processor 110, to store an instruction and data. In some embodiments, the memory in the processor 110 is a cache. The memory may store an instruction or data that has just been used or cyclically used by the processor 110. The memory may store an instruction or data that has just been used or cyclically used by the processor 110. Therefore, repeated access is avoided and a waiting time of the processor 110 is reduced, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface.

The charging management module 140 is configured to receive a charging input from a charger. The charger may be a wireless charger or a wired charger. In some embodiments of wired charging, the charging management module 140 may receive a charging input of a wired charger by using the USB interface 130. In some embodiments of wireless charging, the charging management module 140 may receive a wireless charging input by using a wireless charging coil of the electronic device 100. The charging management module 140 may supply power to the electronic device by using the power management module 141 while charging the battery 142.

The power management module 141 is configured to connect to the battery 142, the charging management module 140, and the processor 110. The power management module 141 receives an input of the battery 142 and/or the charging management module 140, to supply power to the processor 110, the internal memory 121, the external memory, the display screen 194, the camera 193, the wireless communication module 160, and the like. The power management module 141 may be further configured to monitor parameters such as a battery capacity, a battery cycle count, and a battery state of health (electric leakage and impedance). In some other embodiments, the power management module 141 may be alternatively disposed in the processor 110. In still other embodiments, the power management module 141 and the charging management module 140 may further be configured in the same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit or receive an electromagnetic wave signal. Each antenna in the electronic device 100 may be configured to cover one or more communication frequency bands. Different antennas may also be multiplexed to improve utilization of the antennas. For example, the antenna 1 may be multiplexed as a diversity antenna of a wireless local area network. In some other embodiments, the antenna may be used in combination with a tuning switch.

The mobile communication module 150 may provide a solution to wireless communication such as 2G/3G/4G/5G applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 and at least some modules of the processor 110 may be disposed in the same device.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Next, the demodulator transmits the demodulated low-frequency baseband signal to the baseband processor for processing. The low-frequency baseband signal is processed by the baseband processor and then transmitted to an application processor. The AP outputs a sound signal through an audio device (which is not limited to the speaker 170A, the phone receiver 170B, and the like), or displays an image or a video through the display screen 194. In some embodiments, the modem processor may be an independent device. In some other embodiments, the modem processor may be independent of the processor 110, and the modem processor and the mobile communication module 150 or another functional module may be disposed in the same component.

The wireless communication module 160 may provide a solution for wireless communication including a wireless local area network (wireless local area network, WLAN) (such as a wireless fidelity (wireless fidelity, Wi-Fi) network), Bluetooth (Bluetooth, BT), and a global navigation satellite system (global navigation satellite system, GNSS), frequency modulation (frequency modulation, FM), a near field communication (near field communication, NFC) technology, an infrared (infrared, IR) technology, and the like to be applied to the electronic device 100. The wireless communication module 160 may be one or more devices integrating at least one communication processing module. The wireless communication module 160 receives an electromagnetic wave by using the antenna 2, performs frequency modulation and filtering processing on an electromagnetic wave signal, and sends a processed signal to the processor 110. The wireless communication module 160 may alternatively receive a to-be-sent signal from the processor 110, perform frequency modulation and amplification on the to-be-sent signal, and convert the signal into an electromagnetic wave for radiation by using the antenna 2.

In some embodiments, in the electronic device 100, the antenna 1 is coupled to the mobile communication module 150, and the antenna 2 is coupled to the wireless communication module 160, so that the electronic device 100 may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), and a Beidou navigation satellite system (Beidou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display screen 194, the AP, and the like. The GPU is a microprocessor for image processing, and is connected to the display screen 194 and the AP. The GPU is configured to perform mathematical and geometric calculation, and is configured to render graphics. The processor 110 may include one or more GPUs, and execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flex light-emitting diode (flex light-emitting diode, FLED), a mini LED, a micro LED, a micro-OLED, a quantum dot light emitting diode (quantum dot light emitting diode, QLED), or the like. In some embodiments, the electronic device 100 may include one or N display screens 194, and N is a positive integer greater than 1.

The electronic device 100 may implement a photographing function by using the ISP, the camera 193, the video codec, the GPU, the display screen 194, the AP, and the like.

The camera 193 is configured to capture a static image or a video. An optical image of an object is generated through a lens and is projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into a standard image signal in RGB and YUV formats. In some embodiments, the electronic device 100 may include one or N cameras 193, and N is a positive integer greater than 1.

The external memory interface 120 may be configured to connect to an external storage card, for example, a micro SD card, to expand a storage capability of the electronic device 100. The external storage card communicates with the processor 110 by using the external memory interface 120, to implement a data storage function, for example, storing a file such as a music or a video in the external storage card.

The internal memory 121 may be configured to store computer executable program code, and the executable program code includes instructions. The processor 110 runs the instructions stored in the internal memory 121, to implement various functional applications and data processing of the electronic device 100. For example, in this embodiment of this application, when executing the instructions in the internal memory 121, the processor 110 causes the electronic device 100 to implement the fingerprint input method in this embodiment of this application. The internal memory 121 may include a program storage region and a data storage region. The program storage region may store an operating system, an application program required by at least one function (for example, a voice playing function or an image playing function), and the like. The program storage region may store an operating system, an application program required by at least one function (for example, a voice playing function or an image playing function), and the like. In addition, the internal memory 121 may include a high-speed random access memory, or may include a non-volatile memory such as at least one magnetic disk memory, a flash memory, or a universal flash storage (universal flash storage, UFS).

The electronic device 100 may implement an audio function, for example, music playback or recording, by using the audio module 170, the speaker 170A, the phone receiver 170B, the microphone 170C, the headset jack 170D, the AP, and the like.

The audio module 170 is configured to convert digital audio information into an analog audio signal output, and is further configured to convert an analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The pressure sensor 180A is configured to sense a pressure signal, and may convert the pressure signal into an electrical signal. In some embodiments, the pressure sensor 180A may be arranged in the display screen 194. There are many types of pressure sensors 180A, for example, a resistive pressure sensor, an inductive pressure sensor, and a capacitive pressure sensor. The capacitive pressure sensor may include at least two parallel plates made of a conductive material. When a force is applied to the pressure sensor 180A, capacitance between electrodes changes. The electronic device 100 determines pressure strength based on a change in the capacitance. When a touch operation is performed on the display screen 194, the electronic device 100 detects intensity of the touch operation according to the pressure sensor 180A. The electronic device 100 may also calculate a touch position based on a detection signal of the pressure sensor 180A. In some embodiments, touch operations that are applied to a same touch position but have different touch operation strength may correspond to different operation instructions. For example, when a touch operation whose touch operation intensity is less than a first pressure threshold is performed on an icon of an SMS message application, an instruction for viewing an SMS message is performed. When a touch operation whose touch operation intensity is greater than or equal to the first pressure threshold is performed on the icon of the SMS message application, an instruction for creating a new SMS message is performed.

The gyroscope sensor 180B may be configured to determine a motion posture of the electronic device 100. In some embodiments, an angular velocity of the electronic device 100 around three axes (i.e., x, y, and z axes) may be determined by using the gyroscope sensor 180B. The gyroscope sensor 180B may be used for image stabilization during photographing. Exemplarily, when the shutter is pressed, the gyro sensor 180B detects an angle at which the electronic device 100 jitters, and calculates, based on the angle, a distance for which a lens module needs to compensate, and allows the lens to cancel the jitter of the electronic device 100 through reverse motion, thereby implementing image stabilization. The gyroscope sensor 180B may also be used in navigation and a motion sensing game scenario.

The barometric pressure sensor 180C is configured to measure barometric pressure. In some embodiments, the electronic device 100 calculates an altitude by using a barometric pressure value measured by the barometric pressure sensor 180C, to assist in positioning and navigation.

The magnetic sensor 180D includes a Hall sensor. The electronic device 100 may detect opening and closing of a flip leather case by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect acceleration values of the electronic device 100 in all directions (generally in three axes). When the electronic device 100 is stationary, a magnitude and a direction of gravity may be detected. The acceleration sensor may be further configured to recognize a posture of the electronic device, and is applied to an application such as switching between landscape orientation and portrait orientation or a pedometer.

The distance sensor 180F is configured to measure a distance. The electronic device 100 may measure a distance by infrared light or laser. In some embodiments, in a photographing scenario, the electronic device 100 may use the distance sensor 180F to measure a distance to implement fast focusing.

The optical proximity sensor 180G may include, for example, a light emitting diode (LED) and an optical detector such as a photodiode. The light emitting diode may be an infrared light emitting diode. The electronic device 100 emits infrared light by using the light emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear to make a call to automatically turn off the screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display screen 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket to prevent a false touch.

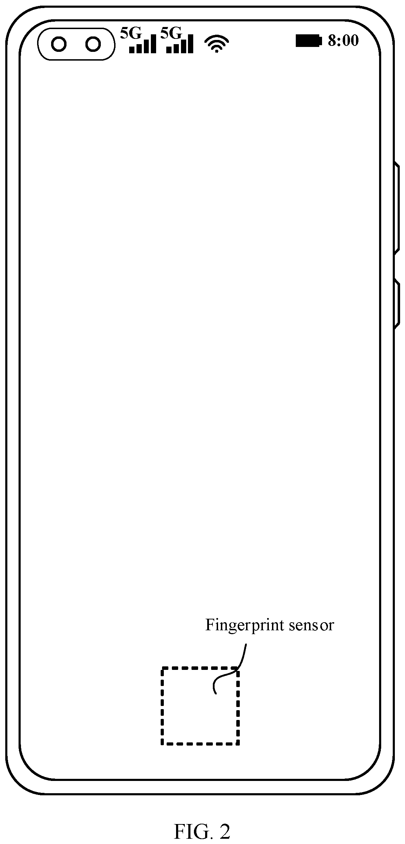

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like. Exemplarily, in the embodiment of this application, the fingerprint sensor 180H may output the collected fingerprint to the processor 110, and the processor 110 may perform operations such as identify and input the fingerprint to implement functions such as fingerprint input and fingerprint-based unlocking. FIG. 2 shows an example of a schematic diagram of a position of a fingerprint sensor. Referring to FIG. 2, exemplarily, the electronic device 100 is a mobile phone, and the fingerprint sensor may be disposed under a display screen of the mobile phone, referred to as an under-screen fingerprint sensor, which may be configured for under-screen fingerprint-based unlocking. Optionally, the fingerprint sensor may generally set corresponding positions according to a width and a length of the mobile phone, so that a user's thumb can touch a fingerprint sensing region corresponding to the fingerprint sensor when the user holds the mobile phone with one hand. Certainly, the above setting manner is only illustrative. In another embodiment, the mobile phone may be provided with a plurality of fingerprint sensors, and positions of the fingerprint sensors may be set according to actual requirements, which are not limited in this application. For example, the fingerprint sensors may be distributed at a plurality of under-screen positions of the display screen, so that the user can press any position on the screen and input the fingerprint. Exemplarily, the fingerprint sensor in the embodiment of this application is an under-screen (i.e., under the display screen) sensor. That is, the fingerprint sensor is disposed in the display screen (or under the display screen). In another embodiment, the fingerprint sensor may also be disposed outside the display screen, for example, under a HOME button or in a side border, or on the back of the mobile phone, which is not limited in this application.

The temperature sensor 180J is configured to detect a temperature. In some embodiments, the electronic device 100 executes a temperature processing policy by using a temperature detected by the temperature sensor 180J. For example, when the temperature reported by the temperature sensor 180J exceeds a threshold, the electronic device 100 lowers performance of a processor located near the temperature sensor 180J, to reduce power consumption to implement thermal protection. In some other embodiments, when the temperature is lower than another threshold, the electronic device 100 heats the battery 142 to prevent abnormal shutdown of the electronic device 100 caused by a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch panel". The touch sensor 180K may be arranged on the display screen 194. The touch sensor 180K and the display screen 194 form a touchscreen, which is also referred to as a "touch screen". The touch sensor 180K is configured to detect a touch operation performed on or near the touch sensor 880J. The touch sensor may transmit the detected touch operation to the application processor, to determine a touch event type. A visual output related to the touch operation may be provided through the display screen 194. In some other embodiments, the touch sensor 180K may alternatively be arranged on a surface of the electronic device 100 at a position different from that of the display screen 194.

The bone conduction sensor 180M may acquire a vibration signal. In some embodiments, the bone conduction sensor 180M may acquire a vibration signal of a vibration bone of a human vocal-cord part. The bone conduction sensor 180M may also contact a body pulse to receive a blood pressure beating signal. In some embodiments, the bone conduction sensor 180M may also be disposed in the headset to obtain a bone conduction headset. The audio module 170 may obtain a speech signal through parsing based on the vibration signal that is of the vibration bone of the vocal-cord part and that is acquired by the bone conduction sensor 180M, to implement a speech function. The application processor may parse heart rate information based on the blood pressure beating signal acquired by the bone conduction sensor 180M, to implement a heart rate detection function.

The key 190 includes a power key, a volume key, and the like. The key 190 may be a mechanical key, or a touch-type key. The electronic device 100 may receive a key input, and generate a key signal input related to user setting and function control of the electronic device 100.

The motor 191 may generate a vibration prompt. The motor 191 may be configured to provide a vibration prompt for an incoming call, and may be further configured to provide a touch vibration feedback. For example, touch operations performed on different applications (for example, photo taking and audio playing) may correspond to different vibration feedback effects. For touch operations performed on different regions of the display screen 194, the motor 191 may also correspond to different vibration feedback effects. Different application scenarios (for example, a time prompt, information receiving, an alarm clock, and a game) may also correspond to different vibration feedback effects. A touch vibration feedback effect may be further customized. For example, in the embodiment of this application, a fingerprint application controls the motor 191 to generate a vibrating prompt to prompt the user to raise one hand. A vibration feedback effect may be continuous vibration of 1s or intermittent vibration of 1s. The above example is only illustrative, and this application makes no limitation thereto.

The indicator 192 may be an indicator light, and may be configured to indicate a charging state or a battery change, or may be further configured to indicate a message, a missed call, a notification, or the like.

The SIM card interface 195 is configured to connect to a SIM card. The SIM card may be inserted into the SIM card interface 195 or plugged from the SIM card interface 195, to come into contact with or be separated from the electronic device 100. The electronic device 100 may support one or N SIM card interfaces. N is a positive integer greater than 1. The SIM card interface 195 can support a nano SIM card, a micro SIM card, a SIM card, and the like. A plurality of cards may all be inserted into the same SIM card interface 195. The plurality of cards may be of the same type or different types. The SIM card interface 195 may further be compatible with different types of SIM cards. The SIM card interface 195 may also be compatible with an external memory card. The electronic device 100 interacts with a network by using a SIM card, to implement functions such as a call and data communication. In some embodiments, the electronic device 100 uses an eSIM, that is, an embedded SIM card. The eSIM card may be embedded in the electronic device 100 and cannot be separated from the electronic device 100.

A software system of the electronic device 100 may use a layered architecture, an event-driven architecture, a microkernel architecture, a micro service architecture, or a cloud architecture. In this embodiment of this application, the software structure of the electronic device 100 is exemplarily described by using an Android system with a layered architecture as an example.

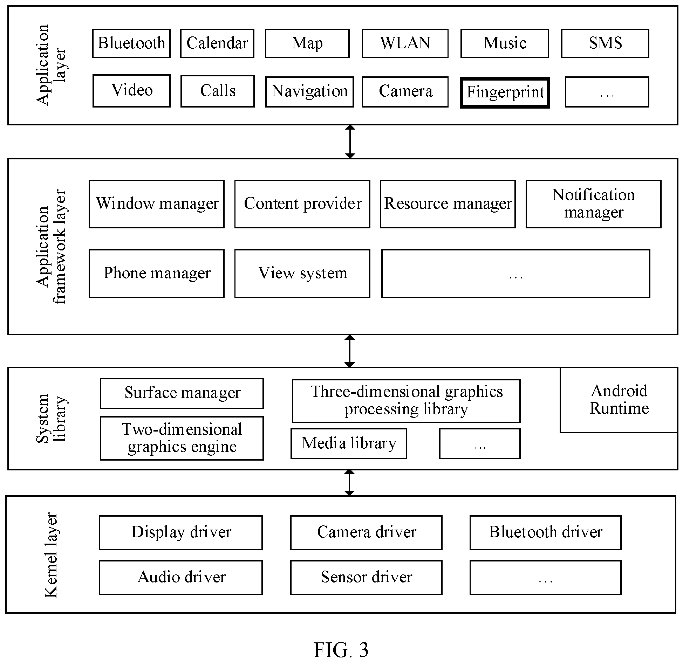

FIG. 3 is a block diagram of a software structure of the electronic device 100 according to an embodiment of this application.

In the layered architecture of the electronic device 100, software is divided into several layers, and each layer has a clear role and task. Layers communicate with each other through a software interface. In some embodiments, the Android system is divided into four layers that are respectively an application layer, an application framework layer, an Android runtime and system library, and a kernel layer from top to bottom.

The application layer may include a series of application packages.

As shown in FIG. 3, the application package may include applications such as Camera, Gallery, Calendar, Phone, Map, Navigation, WLAN, Bluetooth, Music, Video, SMS, and Fingerprint. Exemplarily, the fingerprint application may implement the fingerprint input method in the embodiment of this application.

The application framework layer provides an application programming interface (application programming interface, API) and a programming framework for the applications at the application layer. The application framework layer includes some predefined functions.

As shown in FIG. 3, the application framework layer may include a window manager, a content provider, a view system, a phone manager, a resource manager, a notification manager, and the like.

The window manager is configured to manage a window program. The window manager may acquire a size of a display screen, determine whether there is a status bar, perform screen locking, take a screenshot of the screen, and the like.

The content provider is configured to store and acquire data, and make the data accessible to an application. The data may include video, an image, audio, calls that are made and answered, a browsing history and a bookmark, a phonebook, and the like.

The view system includes visual controls such as a control for displaying text and a control for displaying a picture. The view system may be configured to construct an application. The display interface may include one or more views. For example, a display interface including an SMS message notification icon may include a view for displaying text and a view for displaying a picture.

The phone manager is configured to provide a communication function for the electronic device 100, for example, management of a call status (including answering, declining, or the like).

The resource manager provides various resources such as a localized character string, an icon, a picture, a layout file, and a video file for an application.

The notification manager enables an application to display notification information in a status bar, may be configured to convey a notification-type message. The notification-type message may automatically disappear after the message is displayed for a short period of time without user interaction. For example, the notification manager is configured to provide a notification of download completion, a message notification, and the like. The notification manager may also be a notification that appears in a top status bar of the system in a form of a graph or scroll bar text, for example, a notification of an application running in the background, or may be a notification that appears on the screen in a form of a dialog window. For example, text information is prompted in the status bar, an alert sound is produced, the electronic device vibrates, or the indicator light flickers.

The Android Runtime includes a core library and a virtual machine. The Android runtime is responsible for scheduling and managing the Android system.

The core library includes two parts: One part is a performance function that the Java language needs to invoke, and the other part is a core library of Android.

The application layer and the application framework layer are run in the virtual machine. The virtual machine executes Java files of the application layer and the application framework layer as binary files. The virtual machine is configured to execute functions such as object lifecycle management, stack management, thread management, security and exception management, and garbage collection.

The system library may include a plurality of functional modules such as a surface manager, a media library, a three-dimensional graphics processing library (for example, OpenGL ES), and a 2D graphics engine (for example, SGL).

The surface manager is configured to manage a display subsystem, and provide fusion of 2D and 3D layers for a plurality of applications.

The media library supports playback and recording in a plurality of common audio and video formats, a static image file, and the like. The media library may support a plurality of audio and video encoding formats such as MPEG4, H.264, MP3, AAC, AMR, JPG, and PNG.

The three-dimensional graphics processing library is used to implement three-dimensional graphics drawing, image rendering, synthesis, layer processing, and the like.

The 2D graphics engine is a drawing engine for 2D drawings.

The kernel layer is a layer between hardware and software. The kernel layer includes at least a display driver, a camera driver, an audio driver, and a sensor driver.

It may be understood that the components included in the system framework layer, the system library, and the runtime layer shown in FIG. 3 do not constitute a specific limitation on the electronic device 100. In some other embodiments of this application, the electronic device 100 may include more or fewer components than those shown in the figure, or some components may be combined, or some components may be divided, or different component arrangements may be used.

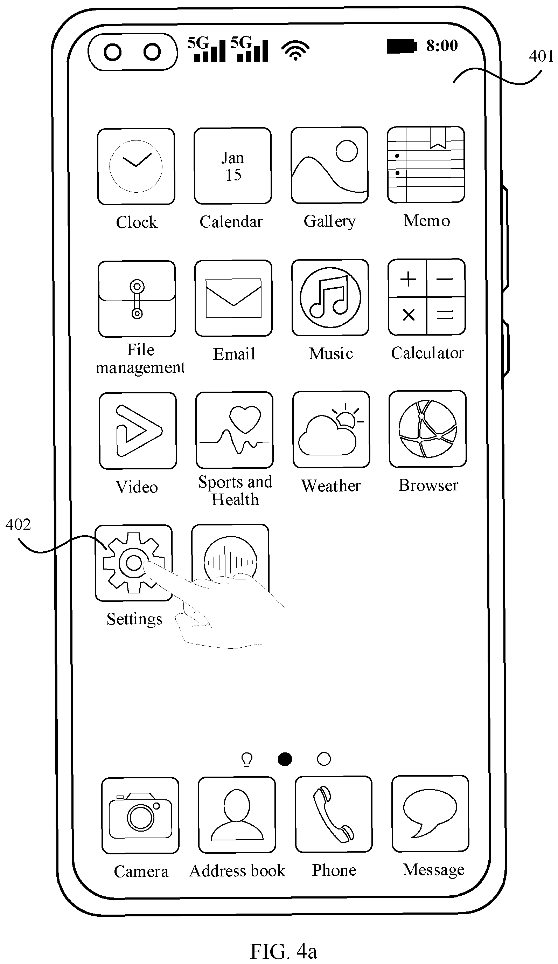

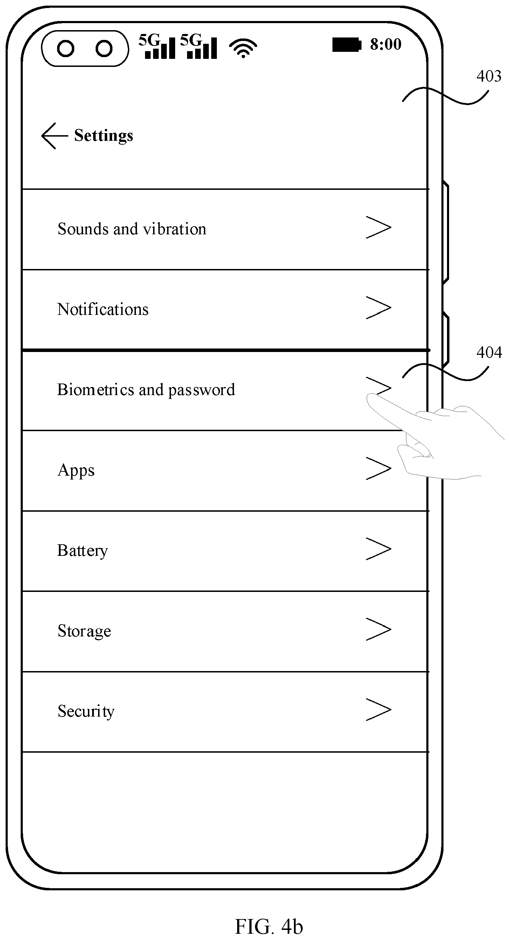

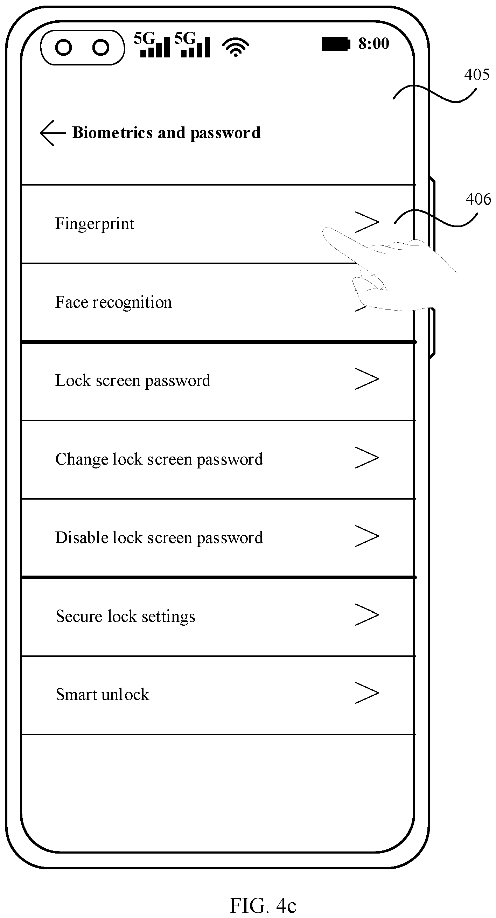

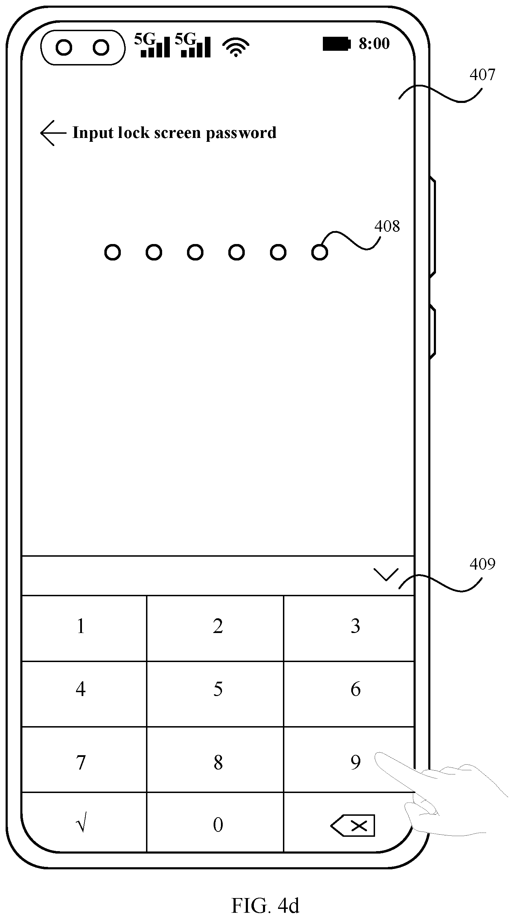

The fingerprint input method in the embodiment of this application is described in detail below with specific embodiments. FIG. 4a to FIG. 4e show examples of schematic diagrams of a user interface. Referring to FIG. 4a, exemplarily, a home screen 401 (also referred to as a desktop) is displayed on a display screen of a mobile phone. The home screen 401 includes one or more controls. The controls include, but are not limited to, a power control, a network control, an application icon control, and the like. A user may tap an icon set control 402 to start a setting application. Exemplarily, the mobile phone displays a setting interface in response to a user operation received. Referring to FIG. 4b, exemplarily, the setting interface 403 includes one or more setting options. The setting options include, but are not limited to, a sounds and vibration option, a notifications option, a biometrics and password option 404, an apps option, a battery option, and the like. The user may tap the biometrics and password option 404 to start a biometric and password application. Referring to FIG. 4c, exemplarily, the mobile phone displays a biometrics and password interface 405 in response to a user operation received. The biometrics and password interface 405 includes one or more options. The options include, but are not limited to, a fingerprint option 406, a face recognition option, a lock screen password option, and the like. The user may tap the fingerprint option 406 to start a fingerprint application. Referring to FIG. 4d, exemplarily, the mobile phone displays an unlock screen password input interface 407 in response to a user operation received. In other words, the mobile phone can display a fingerprint setting interface only after the user enters a correct lock screen password, to ensure security of the mobile phone.

Still referring to FIG. 4d, exemplarily, the unlock screen password input interface 407 includes, but is not limited to, a password row 408 and a keyboard 409. Exemplarily, the user may tap digits corresponding to the lock screen password on the keyboard 409 to enter the lock screen password. When the user taps the digits of the lock screen password, password bits in the password row 408 may remind the user of a currently entered password bit by flickering or filling. For example, if the lock screen password is 123456, when the user taps the digit 1, the first password bit in the password row 408 may be filled with black (or any other color, not limited in this application). The user continues to enter other digits. When the user enters the last digit "6", the mobile phone responds to the received 6-bit password and matches the password with a pre-stored lock screen password. If the matching is successful, the mobile phone displays a fingerprint setting interface. If the matching fails, the user may be prompted to re-enter the lock screen password. It is to be noted that a 6-bit lock screen password is taken as an example in the embodiment of this application, which may also be other bits in other embodiments and is not limited in this application.

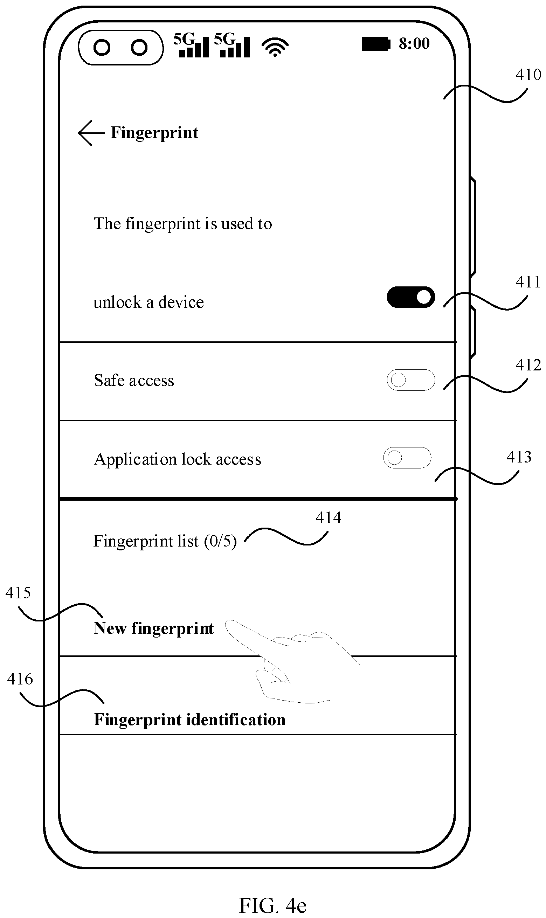

Referring to FIG. 4e, exemplarily, the mobile phone, in response to a user operation received, displays a fingerprint setting interface 410 (also referred to as a fingerprint application interface) after the received 6-bit password is successfully matched with the pre-stored lock screen password. Exemplarily, the fingerprint setting interface 401 includes, but is not limited to, a fingerprint application option, a fingerprint list 414, a new fingerprint option 415, a fingerprint identification option 416, and the like. Exemplarily, the fingerprint application option optionally includes, but is not limited to, a device unlock option 411, a safe access option 412, and an application lock access option 413. Exemplarily, the user may set the above options to set a fingerprint application scenario. For example, the user taps the device unlock option 411 to enable the device unlock option. In response to a user operation received, the mobile phone determines that an inputted fingerprint is to be applied to device unlock. In other words, the user may unlock the mobile phone in an off-screen or lockscreen mode by fingerprint-based unlock.

Still referring to FIG. 4e, exemplarily, the fingerprint list 414 is used to display information of inputted fingerprints. If the fingerprint list 414 in FIG. 4e is empty, it means that no fingerprint has been inputted currently. A specific fingerprint input method is described below in the following embodiments. Exemplarily, the fingerprint list may further include list information, for example, "(0/5) in the figure. The number "5" may indicate a maximum number of fingerprints that can be inputted. That is, a maximum of 5 fingerprints can be inputted. The number "0" indicates that the number of fingerprints currently inputted is 0. It is to be noted that the maximum number of fingerprints that can be inputted is only illustrative, which may be set according to actual requirements in other embodiments and is not limited in this application. Exemplarily, the user taps the new fingerprint option 415. The mobile phone performs a fingerprint input process in response to a user operation received.

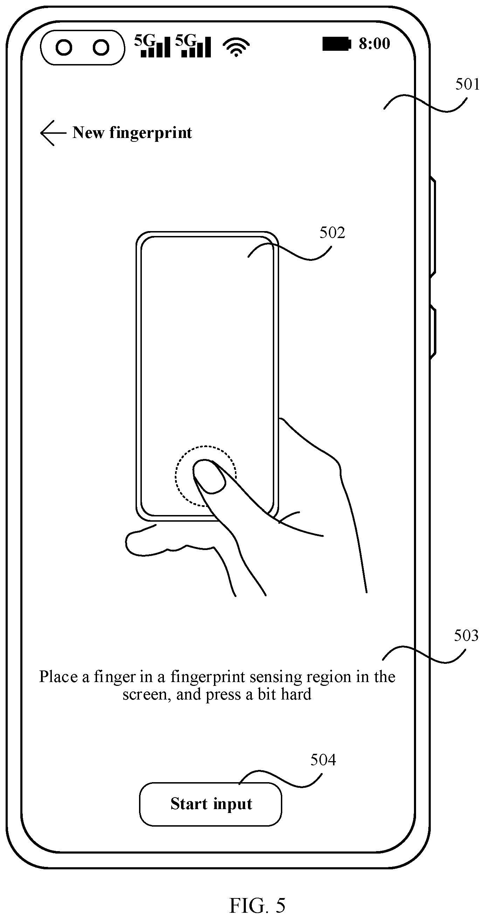

Referring to FIG. 5, exemplarily, the mobile phone displays a new fingerprint interface 501. The new fingerprint interface 501 includes, but is not limited to, a demo input screen 502, prompt information 503, and an input start option 504.

Exemplarily, the demo input screen 502 optionally prompts the user a fingerprint input manner in the form of an animation or a picture. For example, content displayed by the animation may be that the user holds the mobile phone and presses the corresponding fingerprint sensing region of the fingerprint sensor with his/her thumb.

Exemplarily, the prompt information 503 is configured to prompt the user to place his/her finger in the fingerprint sensing region in the screen and to press a bit hard.

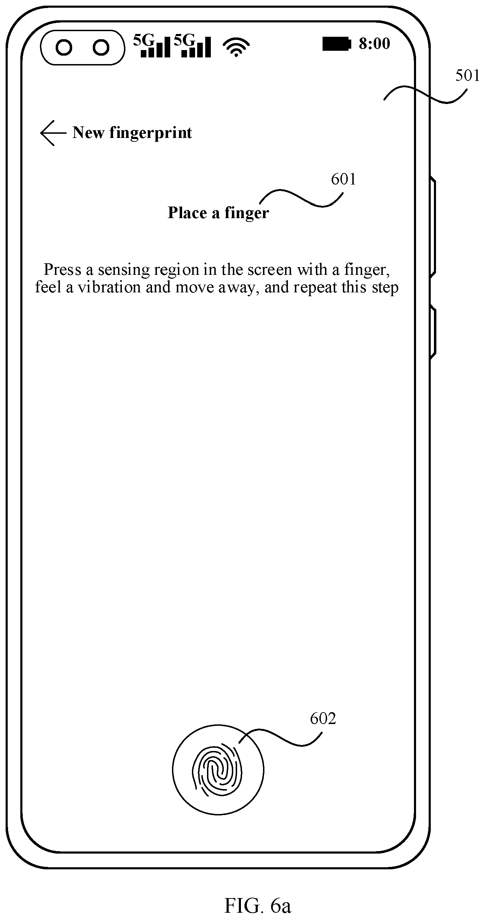

Exemplarily, the user may tap the input start option 504. In one example, referring to FIG. 6a, the mobile phone displays prompt information 601 and a fingerprint sensing region 602 in the new fingerprint interface 501 in response to a user operation received. Exemplarily, the prompt information 601 is used to prompt the user an action to be currently performed, for example, "place a finger". Moreover, the prompt information is further used to prompt the user to "Press a sensing region in the screen with a finger, feel a vibration, and move away. Repeat this step". Exemplarily, the fingerprint sensing region 602 may correspond to the fingerprint sensor shown in FIG. 2. Optionally, a size of the fingerprint sensing region may be smaller than or equal to that of the fingerprint sensor, which is not limited in this application. Optionally, a shape of the fingerprint sensing region is the same as or different from that of the fingerprint sensor. Certainly, the size of the fingerprint sensing region may also be slightly larger than that of the fingerprint sensor. However, the region larger than the fingerprint sensor is an invalid input region. That is, the mobile phone may not be able to identify the fingerprint in this region even if the user places his/her finger in this region. Exemplarily, the shape, the size, and the position of the fingerprint sensing region are only illustrative, which may be set according to actual requirements in another embodiments. For example, the fingerprint sensing region may be in a shape of a rectangle or an oval, which is not limited in this application. Exemplarily, the fingerprint sensing region 602 may include a fingerprint pattern image used to indicate that the region is a fingerprint sensing region.

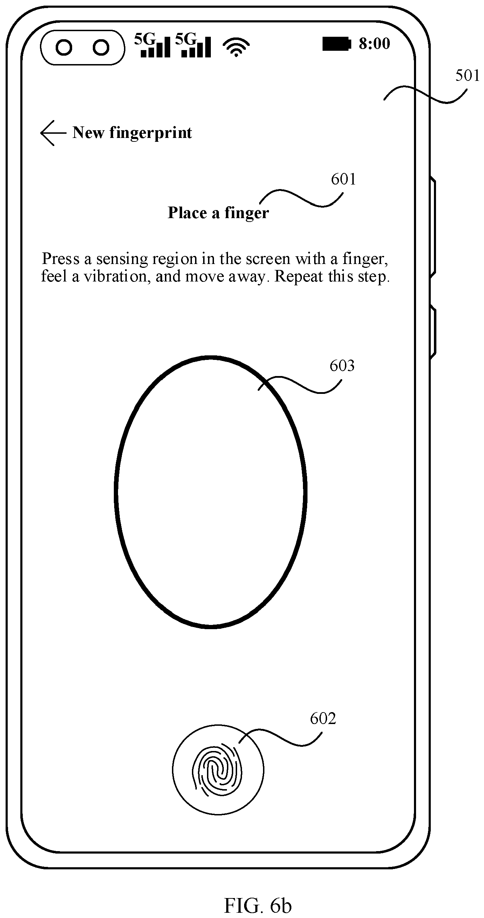

In another example, referring to FIG. 6b, in response to a received operation that the user taps the input start option 504, the mobile phone displays the prompt information 601 and the fingerprint sensing region 602 in the new fingerprint interface 501, and may further include a fingerprint display region 603. Exemplarily, the fingerprint display region 603 may be used to display subsequently inputted fingerprint patterns. Optionally, in the embodiment of this application, the fingerprint display region 603 is in a shape of an oval. In other embodiments, a shape, a border, a size, and a position of the fingerprint display region 603 may be set according to actual requirements. Optionally, a background color of the fingerprint display region 603 may be the same as or different from that of the new fingerprint interface 501. This application makes no limitation thereto.

Exemplarily, the background color of the new fingerprint interface 501 may be a background color with low saturation, such as dark blue. The background color may also be a background color with high low saturation, such as white, which is not limited in this application.

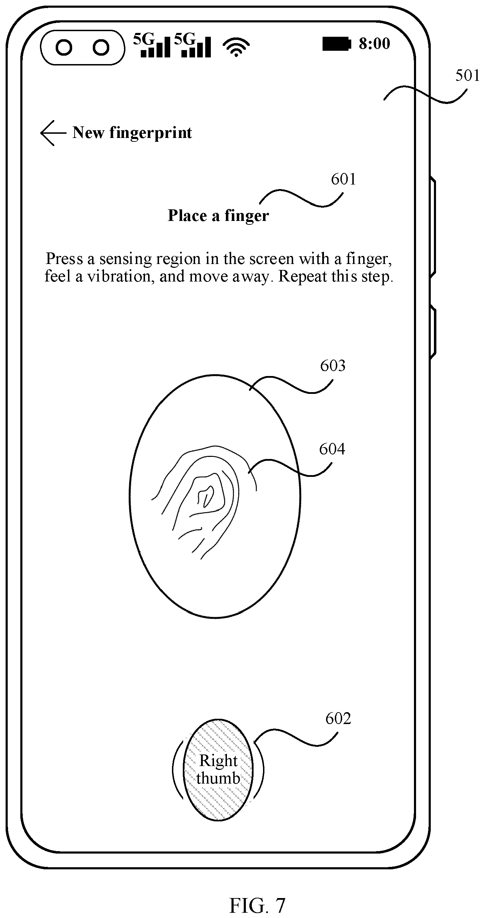

Exemplarily, a fingerprint to be inputted by the user is a fingerprint of the right thumb. Certainly, fingerprints of the user's other fingers may also be inputted with reference to the manner of inputting the fingerprint of the right thumb, which are not described one by one in this application. Referring to FIG. 7, exemplarily, the user overlies the fingerprint of the right thumb on the fingerprint sensing region 602. It is to be noted that the position of the right thumb in the fingerprint sensing region 602 shown in FIG. 7 is only illustrative, and only a current position of the right thumb in the fingerprint sensing region 602 is taken as an example in this application.

Still referring to FIG. 7, exemplarily, the user presses the fingerprint sensing region 602 with the right thumb and keeps still. It is to be noted that the pressing manner may improve accuracy of fingerprint identification. If the user does not press the fingerprint sensing region 602, for example, the user only overlies the right thumb in the fingerprint sensing region 602 without pressing hard, the mobile phone may not accurately identify the fingerprint of the user. It is to be further noted that keeping still while pressing may also be understood as pressing with a static gesture, which can further improve the accuracy of the fingerprint identification.

Exemplarily, the fingerprint sensor of the mobile phone may identify the fingerprint in the fingerprint sensing region 602. The fingerprint sensor outputs the identified fingerprint to the fingerprint application. The fingerprint application may display a corresponding fingerprint pattern 604 in the fingerprint display region 603 to indicate that a fingerprint of a region corresponding to the fingerprint pattern 604 has been inputted.

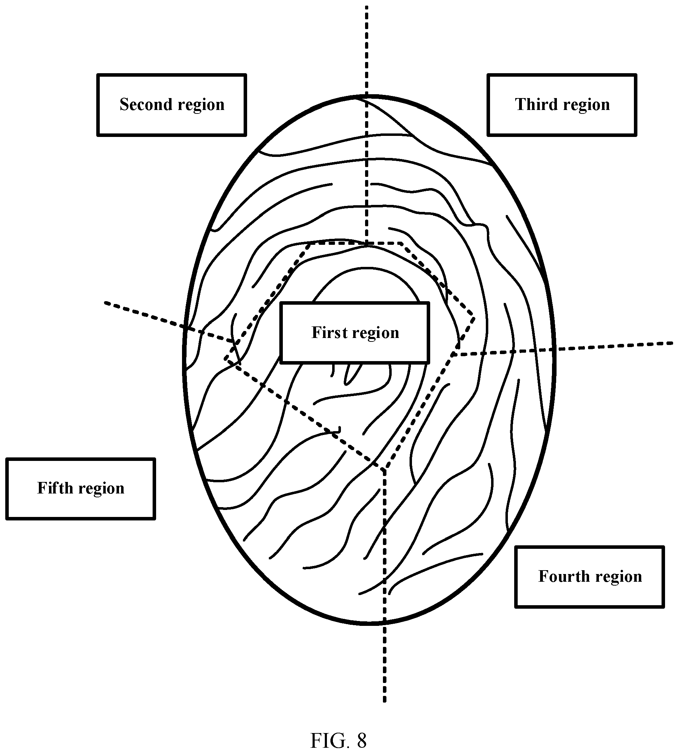

Optionally, referring to FIG. 8, in the embodiment of this application, the fingerprint of the user may be divided into a plurality of regions. For example, the center of the fingerprint is classified as a first region, an upper left part as a second region, an upper right part as a third region, a lower right part as a fourth region, and a lower left part as a fifth region. It is to be noted that the number, the shape, and the size of the regions into which the fingerprint is divided are only illustrative in the embodiment of this application, which may be set according to an actual requirement and are not limited in this application. Exemplarily, the fingerprint application may be preset with a fingerprint pattern corresponding to each region to display the corresponding fingerprint pattern in the fingerprint display region 603 when the fingerprint of the corresponding region is acquired. It is to be noted that the fingerprint pattern shown in the embodiment of this application is only illustrative. In other embodiments, all the fingerprint patterns may be horizontal, vertical or oblique, or other graphics, which are not limited in this application.

In one possible implementation, based on the division manner in FIG. 8, the mobile phone may input the fingerprints of the corresponding regions one by one in order of, for example, the first region, the second region, the third region, the fourth region, and the fifth region.

For example, still referring to FIG. 7, exemplarily, the user presses the fingerprint sensing region 602 with the right thumb, and the fingerprint sensor may identify the fingerprint of the right thumb in the fingerprint sensing region 602. Exemplarily, the fingerprint sensor outputs the identified fingerprint to the fingerprint application. The fingerprint application may display the fingerprint pattern corresponding to the first region in the fingerprint display region 603 in the order of the regions as described above to indicate that the fingerprint in the region has been successfully inputted.

In another possible implementation, the mobile phone may input the fingerprints out of order based on the division manner in FIG. 8. In other words, if the fingerprint sensor identifies a complete fingerprint of a region, the fingerprint application may display the fingerprint pattern of the corresponding region correspondingly in the fingerprint display region.

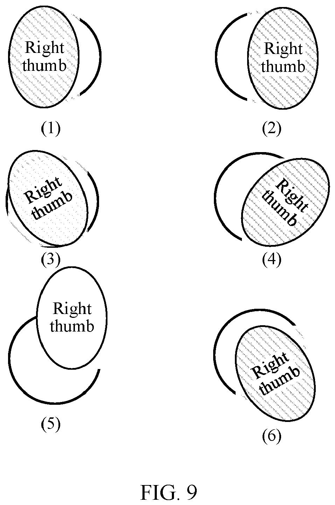

For example, FIG. 9 shows an example of a schematic diagram of different fingerprint pressing manners. Referring to FIG. 9(1), exemplarily, if the user presses a left position of the fingerprint sensing region with the right thumb, the fingerprint sensor may identify the fingerprint of the right thumb in the fingerprint sensing region. The fingerprint sensor outputs the identified fingerprint to the fingerprint application. Exemplarily, based on the region division shown in FIG. 8, the fingerprint application may detect that the fingerprints inputted by the fingerprint sensor include a complete fingerprint in the first region, and the fingerprint application may display the fingerprint pattern corresponding to the first region in the fingerprint display region 603. Although the fingerprints inputted by the fingerprint sensor also include the fingerprints of the second region, the third region, the fourth region, and the fifth region, the fingerprint identified in each region is not the complete fingerprint in the region. That is, there are missing parts in the fingerprint identified. Accordingly, the fingerprint application displays only the identified complete fingerprint in the region, that is, the fingerprint pattern corresponding to the first region.

Referring to FIG. 9(2), exemplarily, if the user presses a right position of the fingerprint sensing region with the right thumb, the fingerprint sensor identifies the fingerprint of the right thumb in the fingerprint sensing region. The fingerprint sensor outputs the identified fingerprint to the fingerprint application. Exemplarily, based on the region division shown in FIG. 8, the fingerprint application may detect that the fingerprints inputted by the fingerprint sensor include a complete fingerprint in the first region, and the fingerprint application may display the fingerprint pattern corresponding to the first region in the fingerprint display region 603. Although the fingerprints inputted by the fingerprint sensor also include the fingerprints of the second region, the third region, the fourth region, and the fifth region, the fingerprint identified in each region is not the complete fingerprint in the region. That is, there are missing parts in the fingerprint identified. Accordingly, the fingerprint application displays only the identified complete fingerprint in the region, that is, the fingerprint pattern corresponding to the first region.

Referring to FIG. 9(3), exemplarily, if the position at which the user presses the fingerprint sensing region with the right thumb is as shown in FIG. 9(3), the fingerprint sensor identifies the fingerprint of the right thumb in the fingerprint sensing region. The fingerprint sensor outputs the identified fingerprint to the fingerprint application. Exemplarily, based on the region division shown in FIG. 8, the fingerprint application may detect that the fingerprints inputted by the fingerprint sensor include complete fingerprints in the first region, the fourth region, and the fifth region, and the fingerprint application may display the fingerprint patterns corresponding to the first region, the fourth region, and the fifth region in the fingerprint display region 603. Although the fingerprints inputted by the fingerprint sensor also include the fingerprints of the second region and the third region, the fingerprint identified in each region is not the complete fingerprint in the region. That is, there are missing parts in the fingerprint identified. Accordingly, the fingerprint application displays only the identified complete fingerprint in the region, that is, the fingerprint patterns corresponding to the first region, the fourth region, and the fifth region.

Referring to FIG. 9(4), exemplarily, if the position at which the user presses the fingerprint sensing region with the right thumb is as shown in FIG. 9(4), the fingerprint sensor identifies the fingerprint of the right thumb in the fingerprint sensing region. The fingerprint sensor outputs the identified fingerprint to the fingerprint application. Exemplarily, based on the region division shown in FIG. 8, the fingerprint application may detect that the fingerprints inputted by the fingerprint sensor include complete fingerprints in the first region and the fifth region. The fingerprint application may display the fingerprint patterns corresponding to the first region and the second region in the fingerprint display region 603. Although the fingerprints inputted by the fingerprint sensor also include the fingerprints of the second region, the third region, and the fourth region, the fingerprint identified in each region is not the complete fingerprint in the region. That is, there are missing parts in the fingerprint identified. Accordingly, the fingerprint application displays only the identified complete fingerprint in the region, that is, the fingerprint patterns corresponding to the first region and the fifth region.

Exemplarily, if the position at which the user presses the fingerprint sensing region with the right thumb is as shown in FIG. 9(5), the fingerprint sensor identifies the fingerprint of the right thumb in the fingerprint sensing region. The fingerprint sensor outputs the identified fingerprint to the fingerprint application. Exemplarily, based on the region division shown in FIG. 8, the fingerprint application may detect that the fingerprints inputted by the fingerprint sensor include a complete fingerprint in the fifth region. The fingerprint application may display the fingerprint pattern corresponding to the fifth region in the fingerprint display region 603. Although the fingerprints inputted by the fingerprint sensor also include the fingerprints of the first region and the fourth region, the fingerprint identified in each region is not the complete fingerprint in the region. That is, there are missing parts in the fingerprint identified. Accordingly, the fingerprint application displays only the identified complete fingerprint in the region, that is, the fingerprint pattern corresponding to the fifth region.

Exemplarily, if the position at which the user presses the fingerprint sensing region with the right thumb is as shown in FIG. 9(6), the fingerprint sensor identifies the fingerprint of the right thumb in the fingerprint sensing region. The fingerprint sensor outputs the identified fingerprint to the fingerprint application. Exemplarily, based on the region division shown in FIG. 8, the fingerprint application may detect that the fingerprints inputted by the fingerprint sensor include complete fingerprints in the first region and the second region. The fingerprint application may display the fingerprint patterns corresponding to the first region and the second region in the fingerprint display region 603. Although the fingerprints inputted by the fingerprint sensor also include the fingerprint of the third region, the fingerprint identified in the third region is not the complete fingerprint in the region. That is, there are missing parts in the fingerprint identified. Accordingly, the fingerprint application displays only the identified complete fingerprint in the region, that is, the fingerprint patterns corresponding to the first region and the second region.

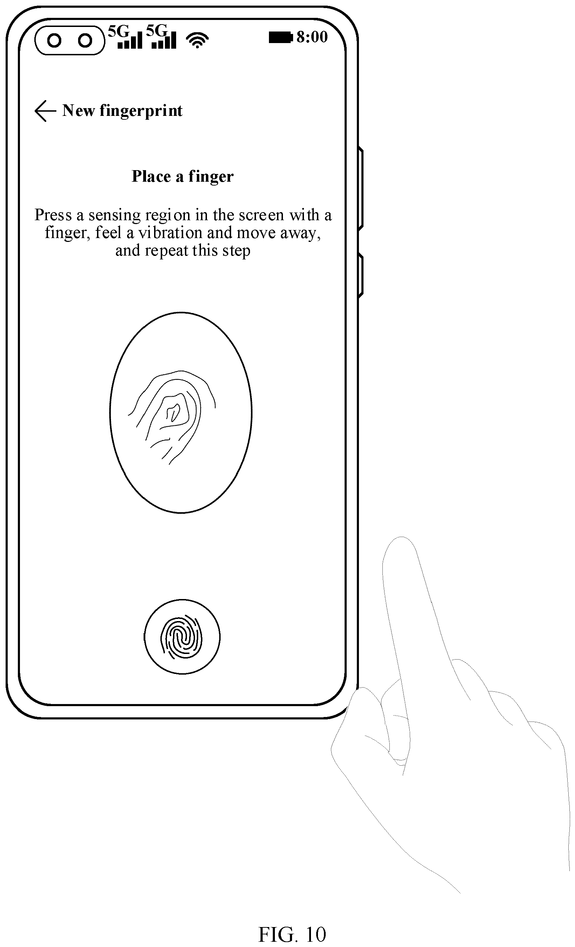

Still referring to FIG. 7, exemplarily, in the embodiment of this application, the fingerprint application may display the corresponding fingerprint pattern in the fingerprint display region 603 in either of the two display manners described above. Exemplarily, the fingerprint application may display the corresponding fingerprint pattern in the fingerprint display region 603 to indicate that a fingerprint of a current region has been successfully inputted. The fingerprint application may control the motor (e.g., the motor 191 in FIG. 1) of the mobile phone to vibrate to prompt the user to remove the finger. The user senses the vibration of the mobile phone and lifts the finger, as shown in FIG. 10. It is to be noted that only vibration prompt is taken as an example in the embodiment of this application. In another embodiment, a sound prompt or a screen flickering prompt is also possible, which is not limited in this application.

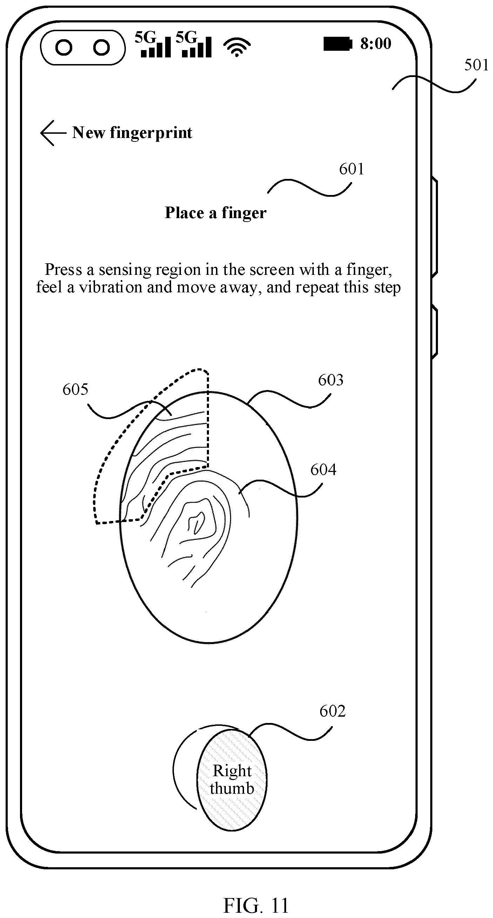

Referring to FIG. 11, exemplarily, the user places the right thumb in the fingerprint sensing region 602 again and presses. The fingerprint sensor outputs the identified fingerprint to the fingerprint application. The fingerprint application detects complete fingerprints in the first region and the second region based on the region division in FIG. 8. The fingerprint of the first region has been inputted. The fingerprint application displays a newly inputted fingerprint in the fingerprint display region 603, that is, a fingerprint pattern 605 corresponding to the second region.

Exemplarily, after the fingerprint application inputs the fingerprint of the second region and displays the fingerprint pattern 605 corresponding to the second region in the fingerprint display region, the fingerprint application controls the motor to vibrate. The user senses the vibration of the mobile phone and lifts the hand.

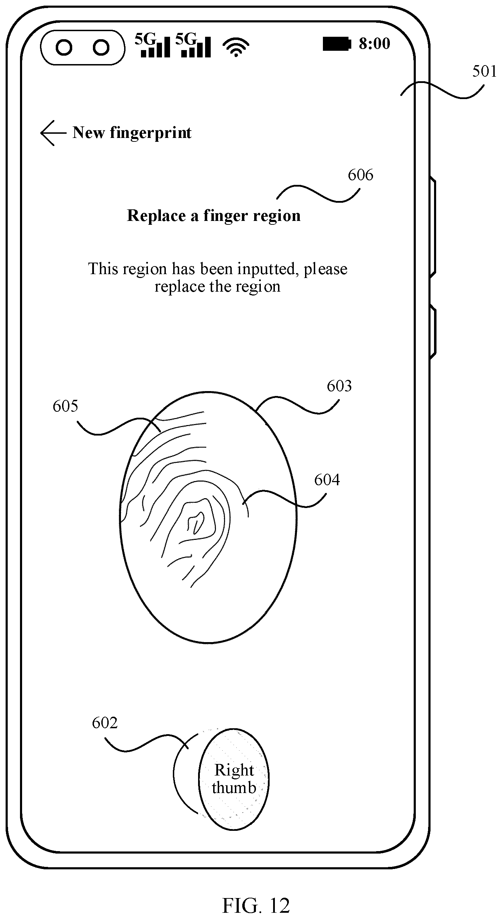

Exemplarily, the user presses the fingerprint sensing region 602 with the right thumb again, as shown in FIG. 12. Exemplarily, based on the fingerprint inputted by the fingerprint sensor, the fingerprint application may detect that fingerprints currently acquired are still the fingerprints of the first region and the second region, that is, the fingerprints of the two regions that have been inputted. Accordingly, the fingerprint application may display the prompt information 606 in the new fingerprint interface 501. Exemplarily, the prompt information 606 is used to prompt the user to replace a fingerprint region. For example, the prompt information may include "Replace a finger region" and "This region has been inputted. Please replace the region".

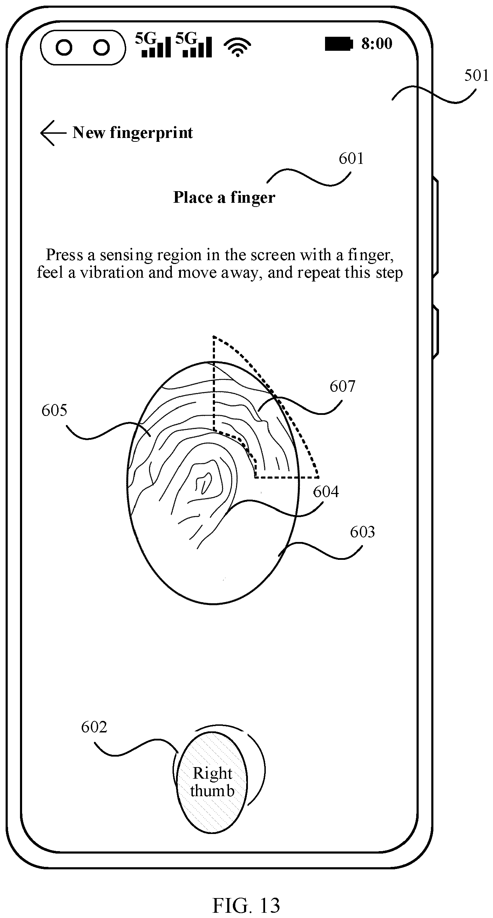

Referring to FIG. 13, exemplarily, the user may lift the hand and then repress, or move the finger while pressing. The position pressed with the right thumb is as shown in FIG. 13. Exemplarily, the fingerprint sensor identifies the fingerprint of the right thumb in the fingerprint sensing region 602, and outputs the identified fingerprint to the fingerprint application. The fingerprint application detects that the fingerprint inputted by the fingerprint sensor is the fingerprint corresponding to the third region. Accordingly, the fingerprint application displays the prompt information 601 in the new fingerprint interface 501. Specific description thereof may be obtained with reference to the above. Details are not described herein. Moreover, the fingerprint application may display a fingerprint pattern 607 corresponding to the third region in the fingerprint display region 603. Next, the fingerprint application controls the motor to vibrate. The user senses the vibration and lifts the hand.

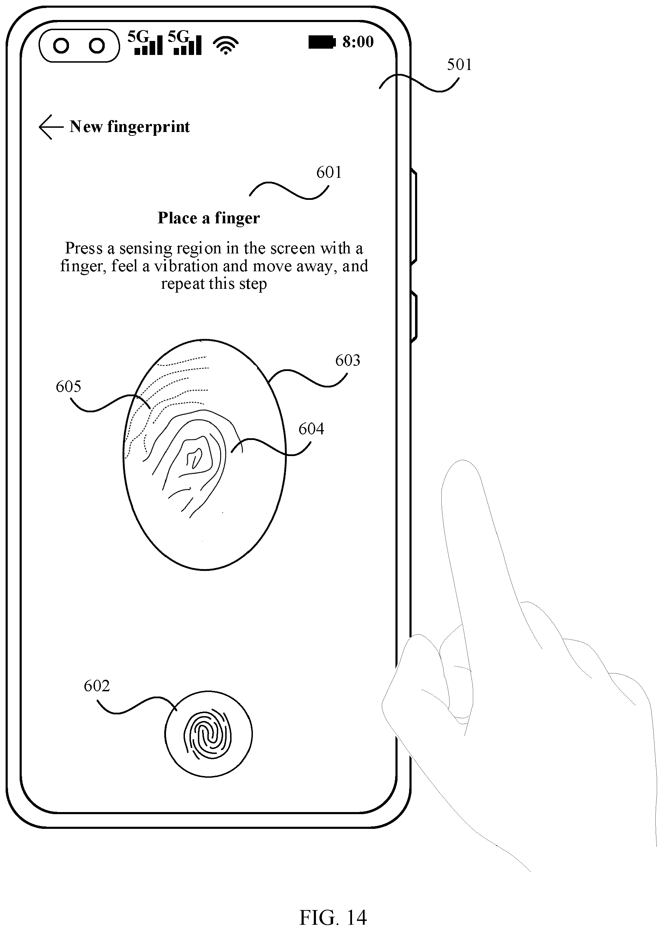

In one possible implementation, as described above, the fingerprint application may input the fingerprints in order of the regions. Referring to FIG. 14 together with FIG. 9, exemplarily, after the user lifts the hand, the fingerprint application detects, in order of the regions, that a to-be-inputted region is the second region. Exemplarily, the fingerprint application may display the fingerprint pattern 605 of the second region by flickering to prompt the user that the to-be-inputted region is the second region. The user may press the fingerprint corresponding to the second region in the fingerprint sensing region during the pressing as prompted. Exemplarily, a duration and a frequency of the flickering of the fingerprint pattern 605 may be set according to an actual requirement. For example, the duration of the flickering may be 1s. After 1s, the display of the fingerprint pattern 605 is canceled.

It is to be noted that the manner in which a fingerprint pattern of a to-be-inputted region is displayed by flickering is taken as an example in the embodiment of this application. In another embodiment, the user may also be prompted to input a fingerprint of a specified region in other prompt manners. For example, prompt information of the to-be-inputted region may be displayed in the second region. In another example, a color different from that of the fingerprint display region 603 may be displayed in the second region. Certainly, other manners are also possible, which are not limited in this application.

Exemplarily, during or after the flicking prompt of the fingerprint display region 603, the user presses in the fingerprint sensing region. Exemplarily, if the user correctly presses as prompted, that is, presses the fingerprint corresponding to the second region in the fingerprint sensing region 602, the fingerprint application can acquire the complete fingerprint corresponding to the second region. Accordingly, the fingerprint application may display the fingerprint pattern corresponding to the second region in the fingerprint display region 603, and a display result may be obtained with reference to FIG. 12. Details are not described herein.

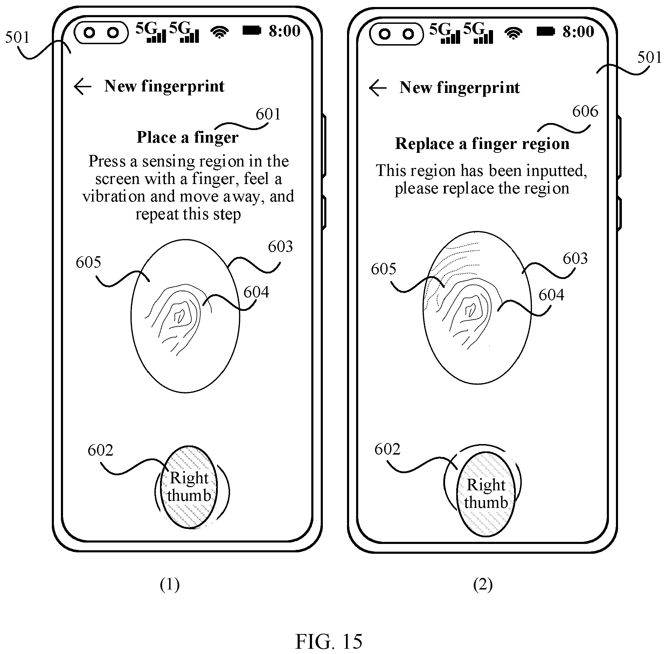

Exemplarily, as shown in FIG. 15(1), the fingerprint sensor identifies the fingerprint of the right thumb in the fingerprint sensing region 602, and outputs the identified fingerprint to the fingerprint application. The fingerprint application detects that the fingerprint inputted by the fingerprint sensor is the fingerprint corresponding to the first region. In other words, the fingerprint application detects that a currently inputted fingerprint is the fingerprint of the first region that has been inputted and does not include the fingerprint of the second region needing to be inputted. Referring to FIG. 15(2), the fingerprint application may display the prompt information 606 in the new fingerprint interface 501 (specific description thereof may be obtained with reference to the above, which is not described herein). Optionally, the fingerprint application may remind the user of a fingerprint region needing to be inputted (i.e., the second region) in the fingerprint display region 603 again by flickering (or in other manners). Referring to FIG. 15(2), exemplarily, after the user presses the fingerprint corresponding to the second region in the fingerprint sensing region 602 to enable the fingerprint application to acquire the complete fingerprint corresponding to the second region, the fingerprint application may display the fingerprint pattern corresponding to the second region in the fingerprint display region 603 to indicate that the fingerprint corresponding to the region has been successfully inputted.

It is to be noted that the to-be-inputted region is the second region during the execution of the fingerprint application based on the manner of inputting the fingerprints in the order of regions above. In the example, the fingerprint application may acquire complete fingerprints of the first region, the second region, and the third region. In this case, the fingerprint application may display the fingerprint patterns corresponding to the second region and the third region in order. In another example, the fingerprint application may also display only the fingerprint pattern corresponding to the second region, and then display the fingerprint pattern corresponding to the third region during next identification. Exemplarily, if the fingerprint application acquires complete fingerprints of the second region and the fourth region, accordingly, the fingerprint application may display only the fingerprint pattern corresponding to the second region, and prompt that a region to be inputted next is the third region.

In one possible implementation, in the embodiment of this application, during fingerprint input of the fingerprint application, the fingerprint application, after acquiring any part of the finger of the user, may display the corresponding fingerprint pattern in the fingerprint display region according to a preset display order. For example, still taking FIG. 9 as an example, if the user presses with the right thumb in the manner shown in FIG. 9(5), the fingerprint application may save the acquired fingerprint corresponding to the fifth region of the finger. When displaying the fingerprint patterns, the fingerprint application may display the fingerprints in the fingerprint display region in a predetermined order. For example, the order in which the fingerprint application displays the fingerprint patterns may be the first region, the second region, the third region, the fourth region, and the fifth region. In other words, the fingerprint acquired by the fingerprint application for the first time is the fingerprint corresponding to the fifth region of the finger, and during the display, the fingerprint application displays the fingerprint pattern corresponding to the first region in the fingerprint display region. In another example, the fingerprint acquired by the fingerprint application for the second time is the fingerprint corresponding to the fourth region of the finger, and during the display, the fingerprint application displays the fingerprint pattern corresponding to the second region in the fingerprint display region.

Exemplarily, according to the manner described above, the fingerprint application acquires an inner ring part of fingerprint of the user's right thumb through multiple identification and input. Exemplarily, in the embodiment of this application, during the fingerprint input, the fingerprint of the user may be divided into an inner-ring fingerprint and an outer-ring fingerprint (also referred to as an edge fingerprint) to prevent errors in the input of the outer-ring fingerprint due to uneven pressing. In other words, in the embodiment of this application, the region division in FIG. 8 is only region division for the inner-ring fingerprint. Certainly, in other embodiments, the region division in FIG. 8 may also be applied to full-fingerprint region division. That is, during the input, the fingerprint application inputs the inner-ring fingerprint and the edge fingerprint in the corresponding regions at the same time.

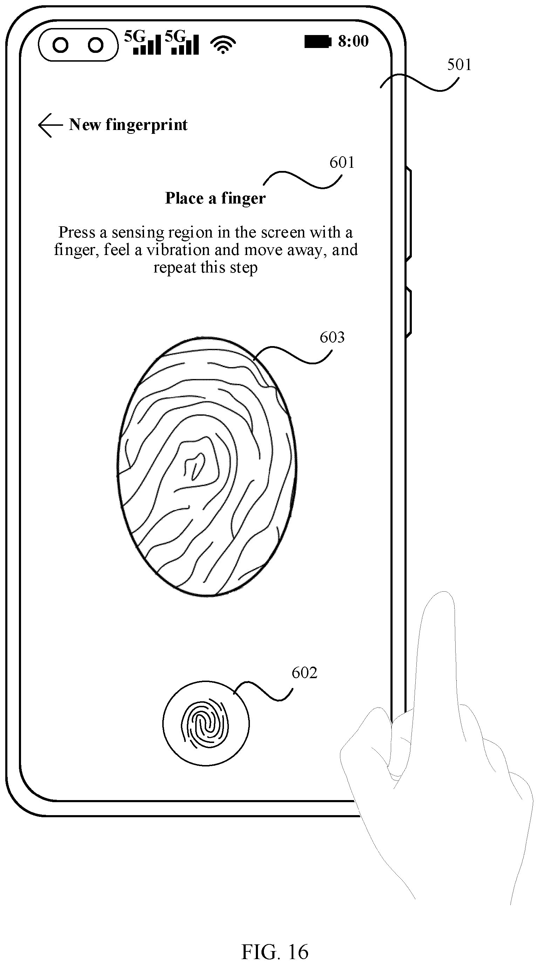

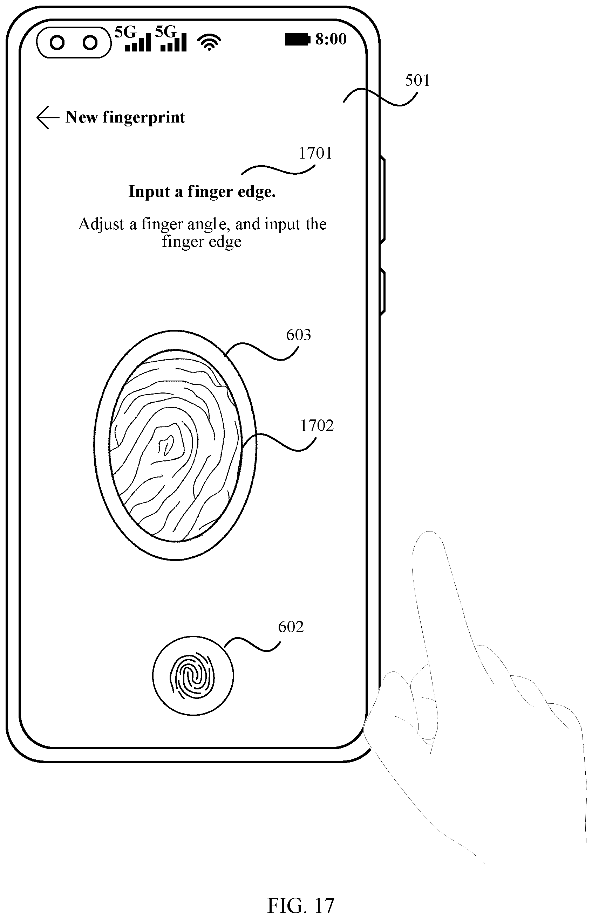

In the embodiment of this application, for example, the inner-ring fingerprint and the edge fingerprint are inputted respectively during the fingerprint input. Referring to FIG. 16, exemplarily, after acquiring fingerprints corresponding to regions (including the first region, the second region, the third region, and the fourth region) of the inner-ring fingerprint, the fingerprint application displays fingerprint patterns corresponding to the regions in the fingerprint display region 603, and controls the motor to vibrate to prompt the user to lift the hand. Exemplarily, the user senses the vibration of the mobile phone and lifts the hand. Referring to FIG. 17, exemplarily, after the user lifts the hand, the fingerprint application detects that the user lifts the hand, and the fingerprint application may display prompt information 1701 in the new fingerprint interface 501. Exemplarily, the prompt information 1701 is used to prompt the user to input a finger edge. For example, the prompt information 1701 may include words "Input a finger edge" and "Adjust a finger angle. Input the finger edge".

Still referring to FIG. 17, exemplarily, a fingerprint pattern 1702 corresponding to the inner-ring fingerprint inputted (referred to as an inner-ring fingerprint region) is displayed in the fingerprint display region 603. Exemplarily, a gap exists between edges of the inner-ring fingerprint region 1702 and the fingerprint display region 603, and is used to be filled with a fingerprint pattern corresponding to the edge fingerprint in the subsequent process. It is to be noted that, in the embodiment of this application, after identifying that the user lifts the hand, the fingerprint application may reduce the inner-ring fingerprint region shown in FIG. 16 in the fingerprint display region 603 to display the inner-ring fingerprint region 1702 shown in FIG. 17. In another embodiment, after identifying that the user lifts the hand, the fingerprint application may also enlarge the fingerprint display region 603 while keeping a size and a position of the inner-ring fingerprint region unchanged.

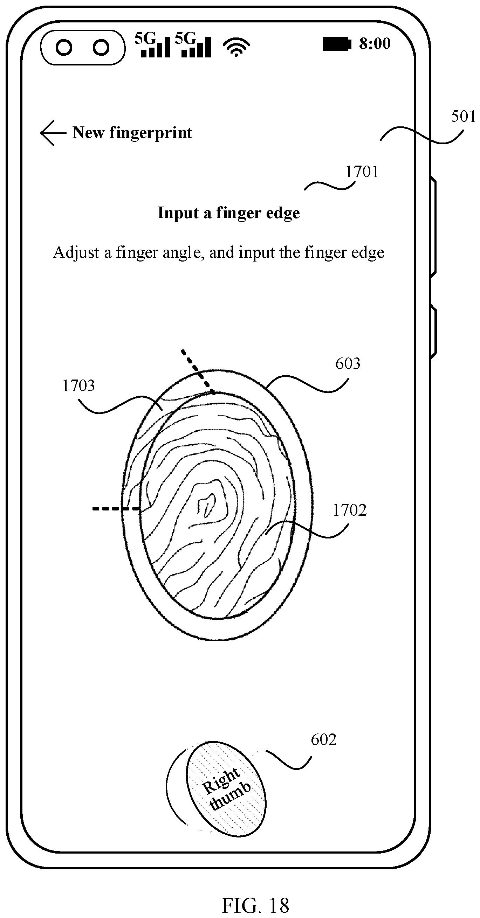

Exemplarily, the fingerprint application may divide the fingerprint edge into a plurality of regions. The division manner may be obtained with reference to FIG. 8. Details are not described herein. Similar to the above solution of inputting the inner-ring fingerprint, in one example, the fingerprint application displays an identified fingerprint pattern corresponding to an edge fingerprint region in the fingerprint display region 603. For example, as shown in FIG. 18, the fingerprint identification application identifies a fingerprint corresponding to the edge fingerprint region, and accordingly, displays the fingerprint pattern 1703 corresponding to the region in the fingerprint display region 603. Certainly, if the fingerprint application identifies fingerprints corresponding to a plurality of edge fingerprint regions, a fingerprint pattern of a corresponding region may be displayed. In another example, the fingerprint application may input edge fingerprints in order of regions. For example, the fingerprint application may prompt the user to input a fingerprint corresponding to next fingerprint edge region after displaying the fingerprint pattern 1703. The prompt manner may be obtained with reference to the above. Details are not described herein. The non-described part of the manner of inputting the edge fingerprint may be obtained with reference to the relevant description of the manner of inputting the inner-ring fingerprint hereinabove. Details are not described herein.

It is to be noted that the inner-ring fingerprint region 1702 includes a boundary (i.e., a black elliptic boundary) in the embodiment of this application. In another embodiment, the inner-ring fingerprint region 1702 may include no boundary or include dashed lines or other color boundaries, which is not limited in this application.

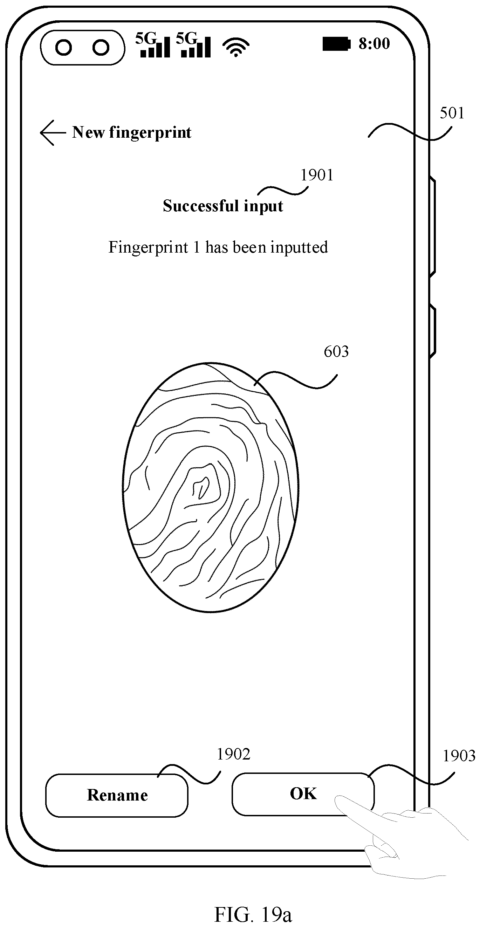

Referring to FIG. 19a, exemplarily, the fingerprint application successfully inputs the fingerprints corresponding to all the edge fingerprint regions, and accordingly, the fingerprint application displays finger fingerprint patterns in the fingerprint display region 603. Exemplarily, the finger fingerprint patterns include an inner-ring fingerprint pattern and an edge fingerprint pattern. Optionally, the fingerprint application removes the boundary of the inner-ring fingerprint region 1702, and displays the inner-ring fingerprint region 1702 and the displayed edge fingerprint pattern in a combined manner. It may be understood that fingerprint patterns between the inner-ring fingerprint region 1702 and the edge fingerprint region are continuous.

Exemplarily, the fingerprint application acquires a current gesture of the user, i.e., a fingerprint corresponding to the right thumb, based on fingerprints acquired multiple times. For example, the fingerprints acquired multiple times may be combined into an entirety according to patterns to obtain the fingerprint corresponding to the right thumb.

It is to be noted that, in the embodiment of this application, the fingerprints inputted by the fingerprint application may be all or most of the fingerprint of the user's right thumb. In other words, in the embodiment of this application, it is permissible that a successful input may be determined after the fingerprint application inputs only most of the fingerprint (e.g., 80%) of the right thumb. That is, a non-inputted part of the fingerprint may be ignored in a case that the inputted fingerprint can be used for subsequent unlocking and may not cause any error in the unlocking.

Still referring to FIG. 19a, exemplarily, the new fingerprint interface 501 includes prompt information 1901. Exemplarily, the prompt information 1901 is used to prompt success of fingerprint input. For example, words "The input is successful" and "Fingerprint 1 has been inputted" may be included. Exemplarily, "Fingerprint 1" is a default fingerprint name. In other words, a name corresponding to the fingerprint of the user's right thumb in the mobile phone is "Fingerprint 1".

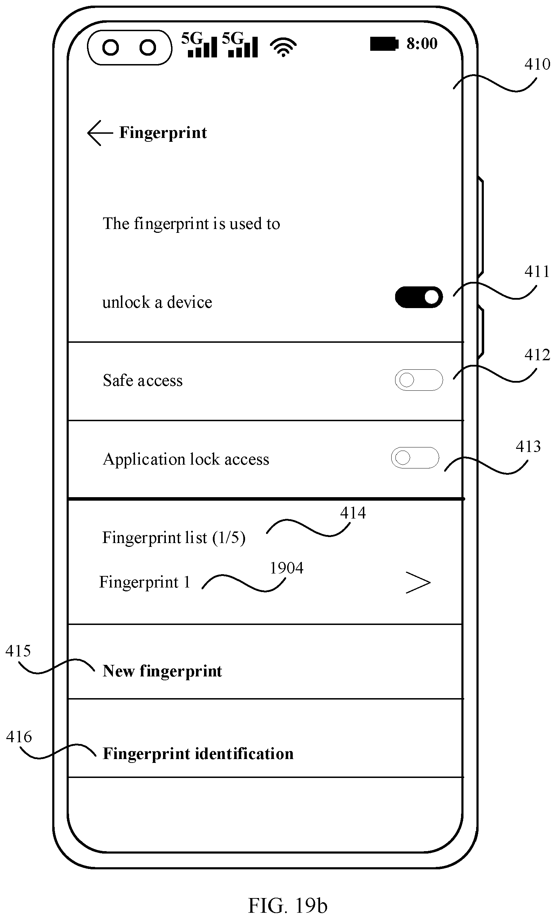

Exemplarily, the new fingerprint interface 501 further includes a rename option 1902 and an OK option 1903. Exemplarily, the user may tap the OK option 1903. The mobile phone registers the inputted fingerprint in response to a user operation received. That is, the mobile phone saves the inputted fingerprint with the name (e.g., "Fingerprint 1 ") correspondingly, and displays an upper-level interface. Referring to FIG. 19b, exemplarily, the mobile phone displays a fingerprint interface 410. Relevant description of the fingerprint interface 410 may be obtained with reference to FIG. 4e. Details are not described herein. Exemplarily, list information in the fingerprint list 414 is displayed as "(1/5)", which indicates that 1 fingerprint has been inputted currently. Moreover, the fingerprint list 414 includes information corresponding to the inputted fingerprint, for example, the fingerprint's name "Fingerprint 1" 1904.

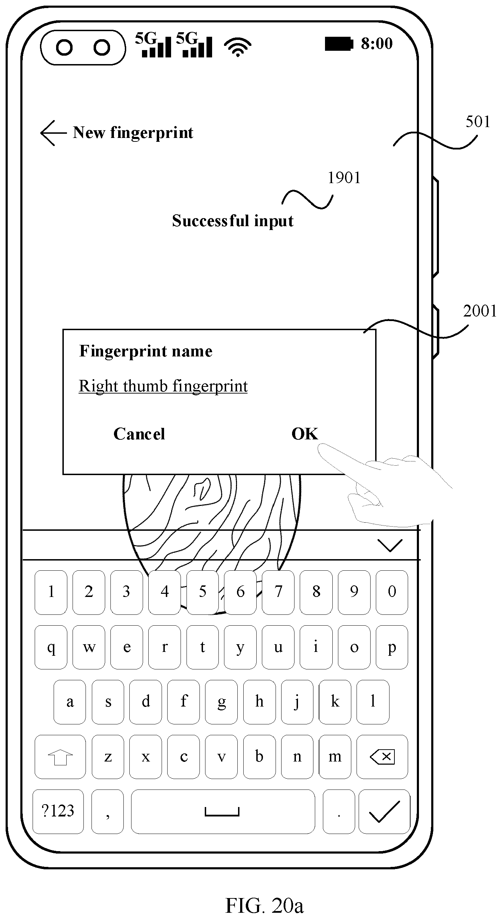

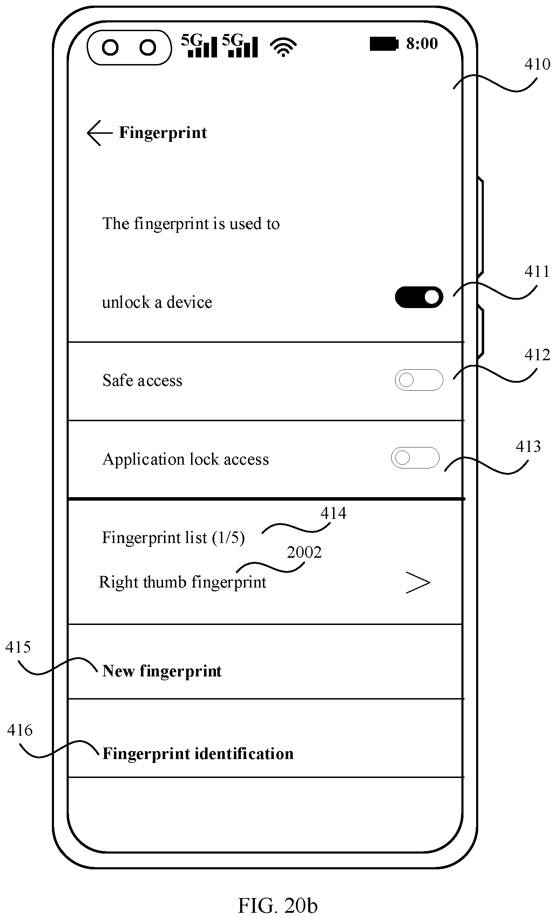

Exemplarily, referring to FIG. 19a, the user may further tap the rename option 1902. Referring to FIG. 20a, exemplarily, the mobile phone displays a fingerprint name setting box 2001 in the new fingerprint interface 501 in response to a user operation received. The fingerprint name setting box 2001 includes, but is not limited to, a fingerprint name display row, a cancel option, an OK option, and the like. Exemplarily, the new fingerprint interface 501 may automatically pop up a soft keyboard. The user may enter a fingerprint name through the soft keyboard. For example, the user may enter "right thumb fingerprint". Accordingly, the mobile phone displays the "right thumb fingerprint" in the fingerprint name display row in response to the received user input. Exemplarily, the user may tap the OK option. The mobile phone displays an upper-level interface in response to a user operation received. Referring to FIG. 20b, exemplarily, the mobile phone displays a fingerprint interface 410. Exemplarily, fingerprint information, for example, a fingerprint name "right thumb fingerprint" 2002, is displayed in the fingerprint list 414.

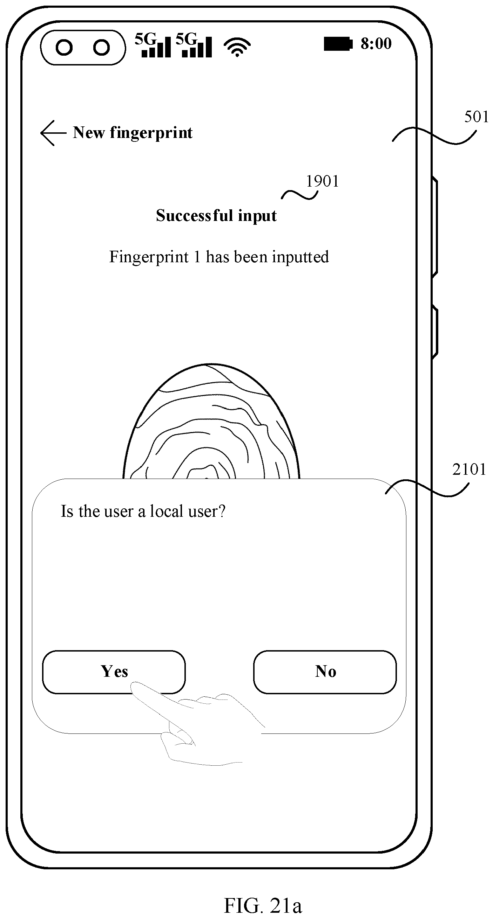

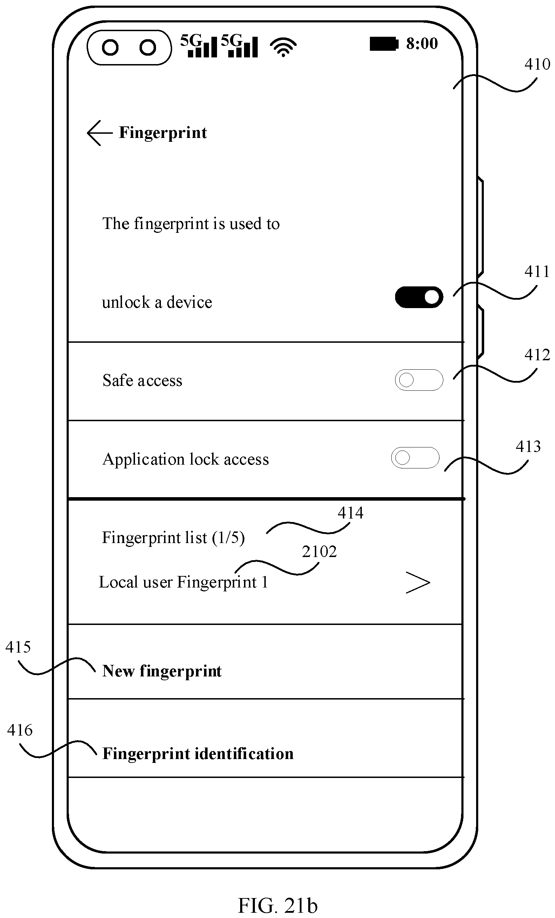

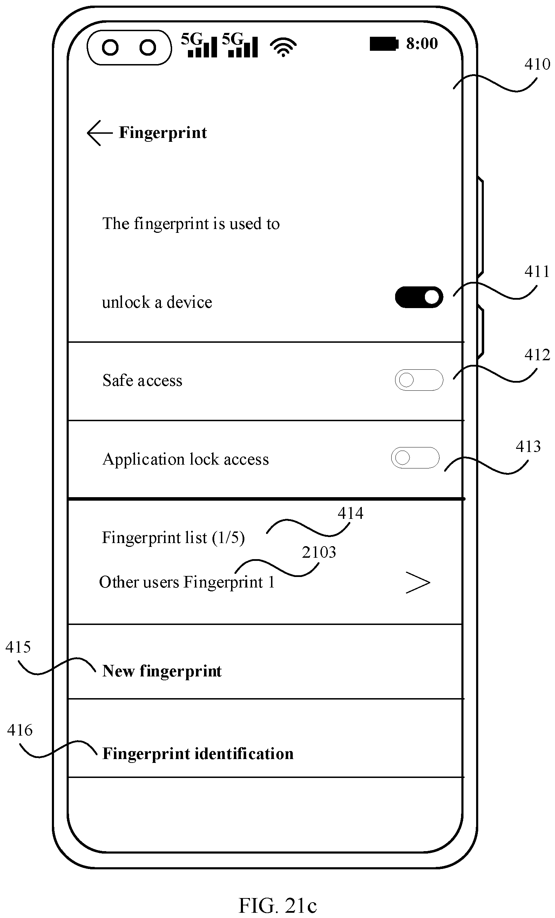

In one possible implementation, referring to FIG. 21a, exemplarily, after the fingerprint input is successful, a prompt box 2101 may also be displayed in the new fingerprint interface 501. The prompt box 2101 includes prompt information "Is the user a local user", a "Yes" option, and a "No" option. In one example, if the user taps the "Yes" option, the mobile phone displays an upper-level interface in response to a user operation received. Referring to FIG. 21b, exemplarily, the mobile phone displays the fingerprint interface 410, and the fingerprint name in the fingerprint list 414 is optionally "local user; fingerprint 1" to indicate that the fingerprint is generated based on a fingerprint of a subscriber. In another example, if the user taps the "No" option, the mobile phone displays an upper-level interface in response to a user operation received. Referring to FIG. 21c, exemplarily, the mobile phone displays the fingerprint interface 410, and the fingerprint name in the fingerprint list 414 is optionally "another user; fingerprint 1" to indicate that the fingerprint is generated based on a fingerprint of another user (not the subscriber).

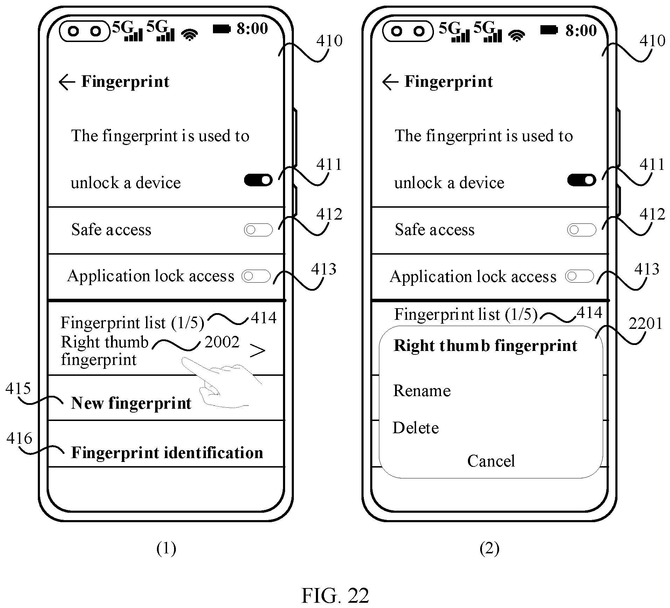

In another possible implementation, referring to FIG. 22, exemplarily, the user may tap the fingerprint name in the fingerprint list 414, for example, the "right thumb fingerprint" 2002. Exemplarily, the mobile phone displays a setting box 2201 in the fingerprint interface 410 in response to a user operation received. Exemplarily, the setting box 2201 includes, but is not limited to, a fingerprint name (e.g., "right thumb fingerprint"), a "rename" option, a "delete" option, and a "cancel" option. Exemplarily, if the user taps the "rename" option, the mobile phone may display the soft keyboard and the prompt box 2001 in FIG. 20a in response to a user operation received, so that the user can rename a current fingerprint. Exemplarily, if the user taps the "delete" option, the mobile phone deletes the fingerprint in response to a user operation received. Exemplarily, if the user taps the "cancel" option, the mobile phone cancels the display setting box 2201 in response to a user operation received.

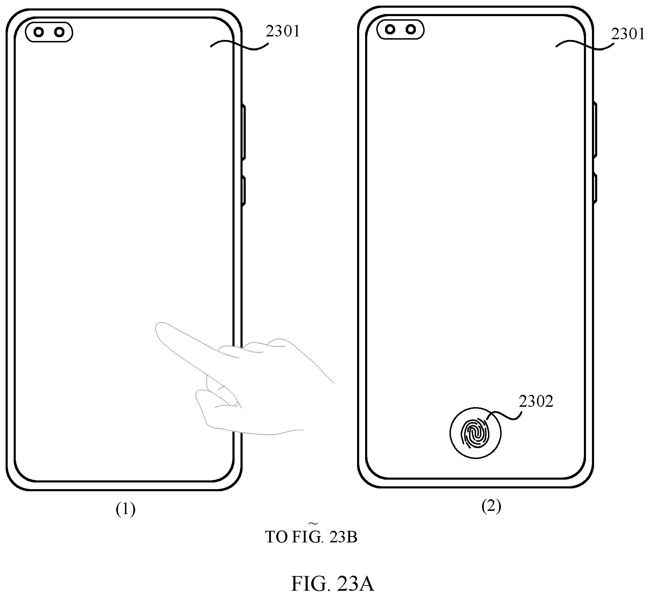

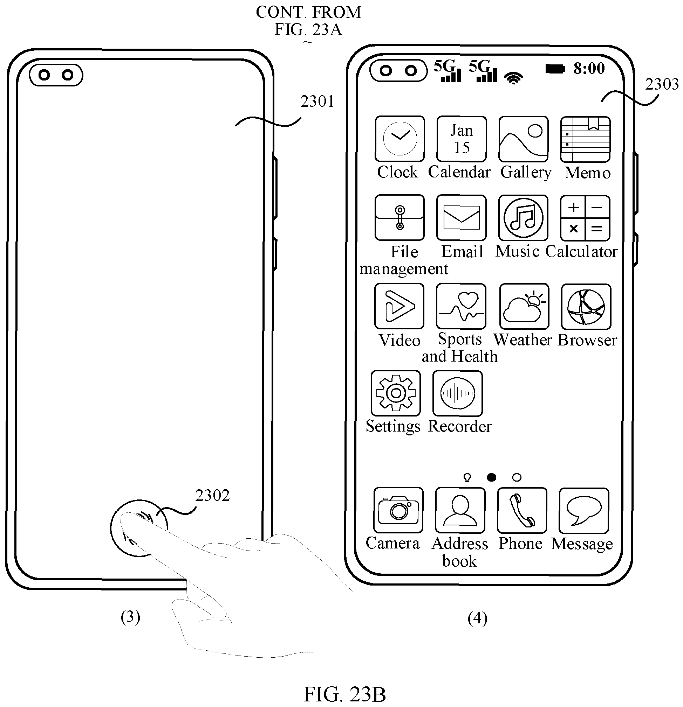

FIG. 23A and FIG. 23B show an example of a schematic diagram of the unlocking scenario. Referring to (1) of FIG. 23A, exemplarily, the mobile phone is in an off-screen mode. The user may tap an off-screen interface 2301. Referring to (2) of FIG. 23A, the mobile phone displays a fingerprint sensing region 2302 in the off-screen interface 2301 in response to a user operation received. Referring to (3) of FIG. 23B, exemplarily, the user presses the fingerprint sensing region 2302 with the right index finger. Exemplarily, the fingerprint sensor outputs the identified fingerprint to the fingerprint application, and the fingerprint application compares the fingerprint inputted by the fingerprint sensor with one or more fingerprints saved. In one example, assuming that the fingerprint of the user's right index finger has been inputted, accordingly, the fingerprint application determines that fingerprint comparison is successful. The fingerprint application may instruct the mobile phone to unlock. Referring to (4) of FIG. 23B, exemplarily, the mobile phone displays a desktop 2303. In another example, assuming that the fingerprint of the user's right index finger is not inputted in the mobile phone, accordingly, the fingerprint application determines that the fingerprint comparison fails and the mobile phone does not unlock.

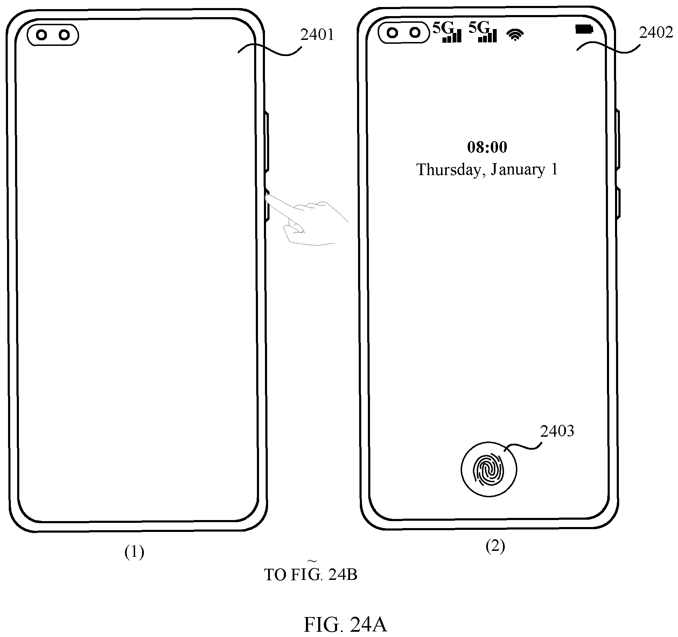

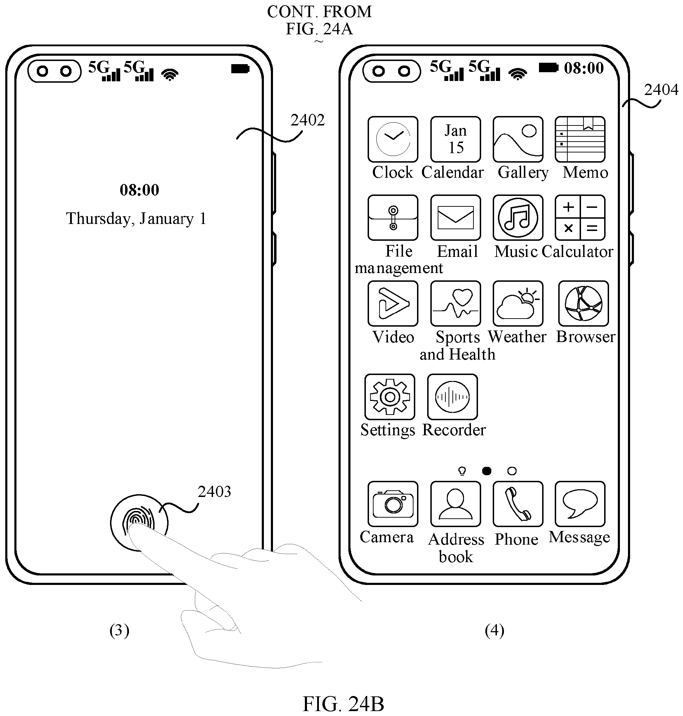

FIG. 24A and FIG. 24B show an example of a schematic diagram of another unlocking scenario. Referring to (1) of FIG. 24A, exemplarily, the mobile phone is in an off-screen mode. The user may tap a power button. Referring to (2) of FIG. 24A, the mobile phone displays a lockscreen interface 2402 in response to a user operation received. Exemplarily, a fingerprint sensing region 2403 is displayed in the lockscreen interface 2402. Referring to (3) of FIG. 24B, exemplarily, the user presses the fingerprint sensing region 2403 with the right index finger. Exemplarily, the fingerprint sensor outputs the identified fingerprint to the fingerprint application, and the fingerprint application compares the fingerprint inputted by the fingerprint sensor with one or more fingerprints saved. In one example, assuming that the fingerprint of the user's right index finger has been inputted, accordingly, the fingerprint application determines that fingerprint comparison is successful. The fingerprint application may instruct the mobile phone to unlock. Referring to (4) of FIG. 24B, exemplarily, the mobile phone displays a desktop 2404. In another example, assuming that the fingerprint of the user's right index finger is not inputted in the mobile phone, accordingly, the fingerprint application determines that the fingerprint comparison fails and the mobile phone does not unlock.

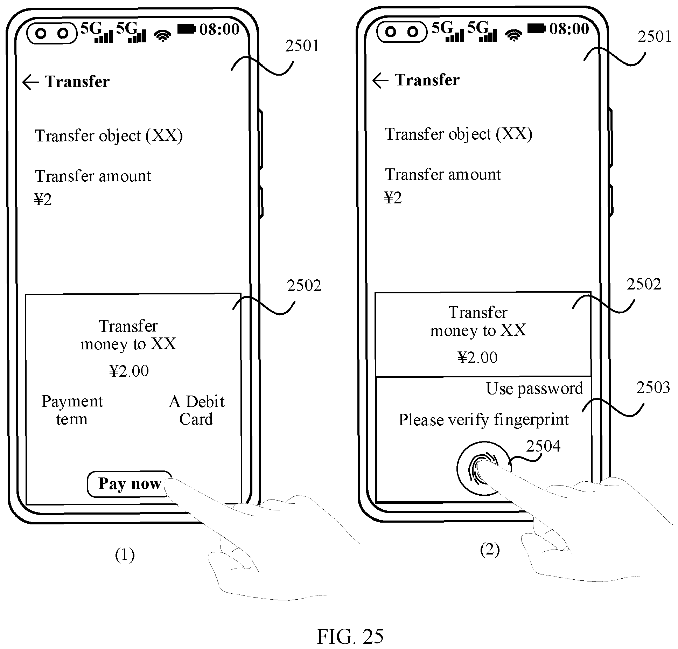

FIG. 25 shows an example of a schematic diagram of a payment scenario. Referring to FIG. 25(1), exemplarily, a payment interface 2501 (also referred to as a transfer interface) includes transfer prompt information and a transfer prompt box 2502. The transfer prompt box 2502 includes transfer prompt information and a "Pay now" option. The user may tap the "Pay now" option after confirming that the transfer information is correct. Referring to FIG. 25(2), the mobile phone displays a fingerprint verification box 2503 in a transfer interface 2501 in response to a user operation received. Exemplarily, the fingerprint verification box 2503 may include prompt information "Please verify fingerprint", a "Use password" option, and a fingerprint sensing region 2504. In one example, the user may press the right index finger into the fingerprint sensing region 2504. The fingerprint application may identify an acquired fingerprint. Specific details may be obtained with reference to the above, and are not described herein. Exemplarily, if the fingerprint identification is successful, the fingerprint application may instruct the mobile phone to allow payment. If the fingerprint identification fails, the prompt information may be displayed in the fingerprint verification box 2503 to prompt the user to re-input the fingerprint. Exemplarily, the user may also tap the "Use password" option to pay by entering a password.

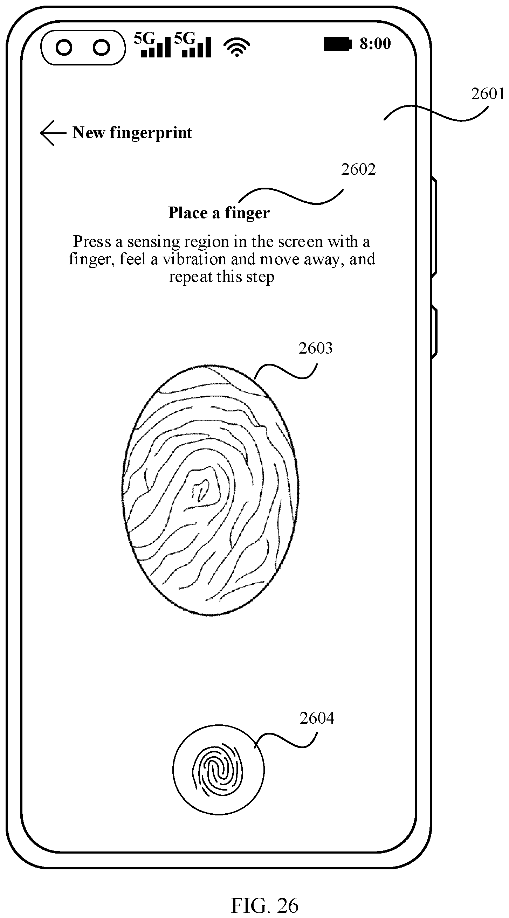

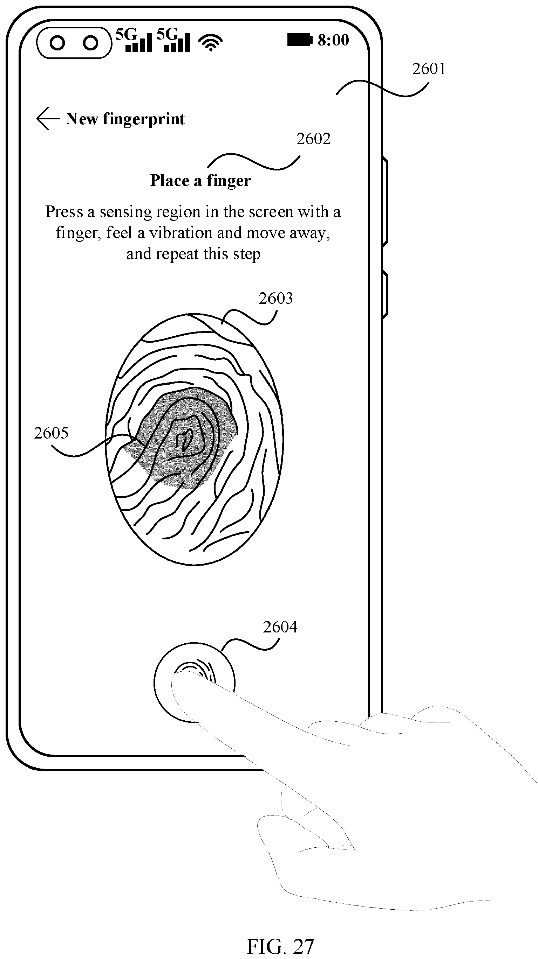

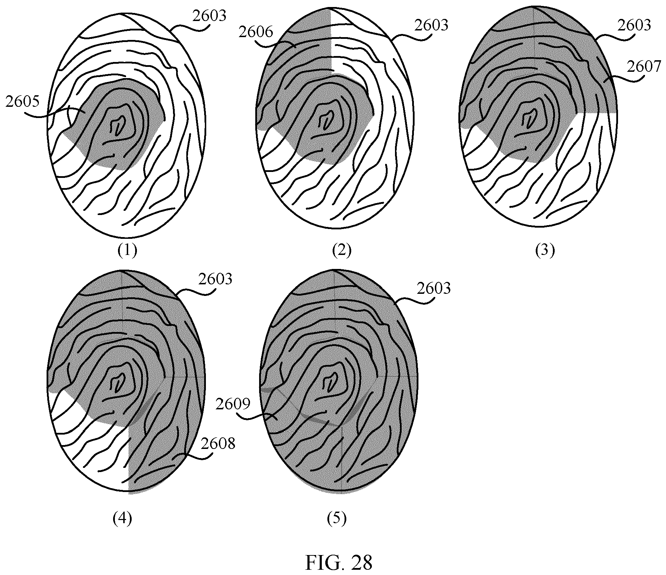

In one possible implementation, an embodiment of this application may further provide another fingerprint input method. FIG. 26 shows an example of a new fingerprint interface 2601. Exemplarily, the new fingerprint interface 2601 includes, but is not limited to, prompt information 2602 (the description may be obtained with reference to the above, and is not described in detail herein), a fingerprint display region 2603, a fingerprint sensing region 2604, and so on. Optionally, a preset fingerprint pattern is displayed in the fingerprint display region 2603. Optionally, the fingerprint application may be preset with a plurality of fingerprint patterns. The fingerprint application may display any one of the plurality of preset fingerprint patterns in the fingerprint display region 2603 each time the new fingerprint interface 2601 is displayed. Combined with FIG. 27, FIG. 28 shows an example of a schematic diagram of fingerprint input. Referring to FIG. 27, exemplarily, the user presses the fingerprint sensing region 2604 with the right index finger. Optionally, the fingerprint sensor inputs an acquired fingerprint to the fingerprint application. The fingerprint application identifies the acquired fingerprint, and determines that a currently identified region includes a complete fingerprint of the first region (specific details may be obtained with reference to the above, and are not described herein). Exemplarily, the fingerprint application fills a corresponding region (e.g., a first region 2605) in the fingerprint display region 2603 to indicate that the current region has been successfully inputted. In the embodiment of this application, a filling color and transparency may be set according to an actual requirement. For example, the filling color may be red and the transparency may be 80%. This application makes no limitation thereto. It is to be noted that FIG. 27 shows only an example of one input display manner. That is, an inputted region is displayed by filling. Non-described details may be obtained with reference to relevant content in the above embodiment. Details are not described herein.

In another possible implementation, the manner of display by filling in the embodiment of this application may also be combined with the new fingerprint interface shown in FIG. 6a or FIG. 6b. Taking FIG. 6a as an example, exemplarily, after the fingerprint application identifies the fingerprint corresponding to the first region, the interface shown in FIG. 7 is displayed. A fingerprint pattern 604 is displayed in the fingerprint display region 603, and the first region corresponding to the fingerprint pattern 604 may include a background color (also referred to as a fill color). The fill color is different from a color of the fingerprint pattern.

FIG. 28 shows an example of a schematic diagram of fingerprint input. Referring to FIG. 28, exemplarily, in combination with the region division in FIG. 8, the fingerprint application may fill the corresponding region in order or based on the identified fingerprint. Referring to FIG. 28(1), exemplarily, the fingerprint application identifies the fingerprint corresponding to the first region, and may fill a fingerprint pattern 2605 in the first region in the fingerprint display region 2603 with a color. Referring to FIG. 28(2), exemplarily, the fingerprint application identifies the fingerprint corresponding to the second region, and may fill a fingerprint pattern 2606 in the second region in the fingerprint display region 2603 with the fingerprint. Referring to FIG. 28(3), exemplarily, the fingerprint application identifies the fingerprint corresponding to the third region, and may fill a fingerprint pattern 2607 in the third region in the fingerprint display region 2603 with the fingerprint. Referring to FIG. 28(4), exemplarily, the fingerprint application identifies the fingerprint corresponding to the fourth region, and may fill a fingerprint pattern 2608 in the fourth region in the fingerprint display region 2603 with the fingerprint. Referring to FIG. 28(5), exemplarily, the fingerprint application identifies the fingerprint corresponding to the fifth region, and may fill a fingerprint pattern 2609 in the fifth region in the fingerprint display region 2603 with the fingerprint. It is to be noted that FIG. 28 only schematically describes a filling process of fingerprint input. This application does not limit a sequence of fingerprint filling.

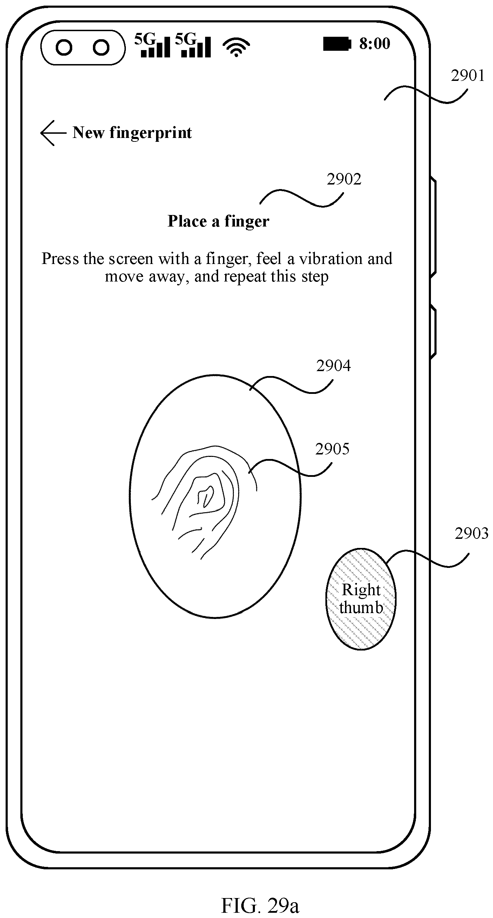

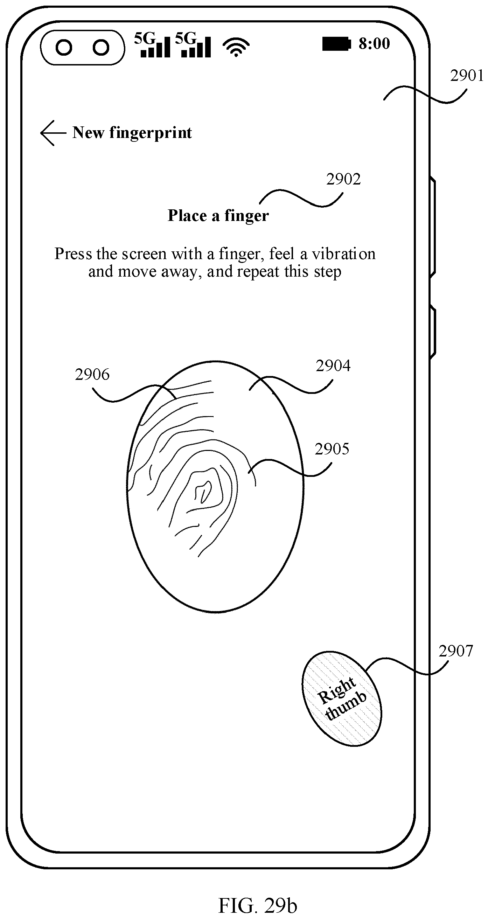

In one possible implementation, as described above, the fingerprint sensor may be disposed at a plurality of under-screen positions of the display screen to achieve full-screen fingerprint input. FIG. 29a to FIG. 29b show examples of schematic diagrams of the fingerprint input. Referring to FIG. 29a, exemplarily, the mobile phone has a full-screen fingerprint input function. The user may press any position of the screen of the mobile phone when inputting a fingerprint. As shown in FIG. 29a, the user presses a position 2903 of a fingerprint screen with the right thumb. The fingerprint sensor corresponding to the position 2903 outputs the identified fingerprint to the fingerprint application. The fingerprint application identifies the received fingerprint, and displays a fingerprint pattern of a corresponding fingerprint region in a fingerprint display region 2904. For example, as shown in FIG. 29a, if the fingerprint application identifies the fingerprint corresponding to the first region, the fingerprint application displays a fingerprint pattern 2905 corresponding to the first region in the fingerprint display region 2904. Specific display and identification manners may be obtained with reference to the above. Details are not described herein. Optionally, similar to the above embodiment, the fingerprint application may display a complete fingerprint of at least one region in the fingerprint display region 2904 when identifying the complete fingerprint of the at least one region. For example, if the fingerprint application identifies the second region (the region division may be obtained with reference to relevant content in FIG. 8, and is not described in detail herein), the fingerprint application displays a fingerprint pattern corresponding to the second region. Optionally, the fingerprint application may input fingerprints in a predetermined order. Specific details may be obtained with reference to the above, and are not described herein. Exemplarily, the fingerprint application controls the mobile phone to vibrate after inputting the fingerprint of the corresponding region. The user senses the vibration and then lifts the hand. The user may press the same position again as the previous press. Optionally, the user may also press any other position on the screen. For example, as shown in FIG. 29b, exemplarily, the user presses a position 2907 with the right thumb. The position 2907 is different from the position 2903. Exemplarily, the fingerprint sensor outputs the identified fingerprint to the fingerprint application. The fingerprint application may display the fingerprint pattern of the corresponding region (e.g., the second region) in the fingerprint display region 2904. Non-described details may be obtained with reference to relevant description in the above embodiment. Details are not described herein.

It may be understood that to implement the foregoing functions, the electronic device or the like includes hardware structures and/or software modules for performing the various corresponding functions. With reference to the algorithm steps described in the embodiments disclosed in this specification, this application can be implemented in a form of hardware or hardware and computer software. Whether a function is implemented by hardware or computer software driving hardware depends on particular applications and design constraints of the technical solutions. With reference to the embodiments, a person skilled in the art may use different methods to implement the described functions for each particular application, but it should not be considered that the implementation goes beyond the scope of this application.

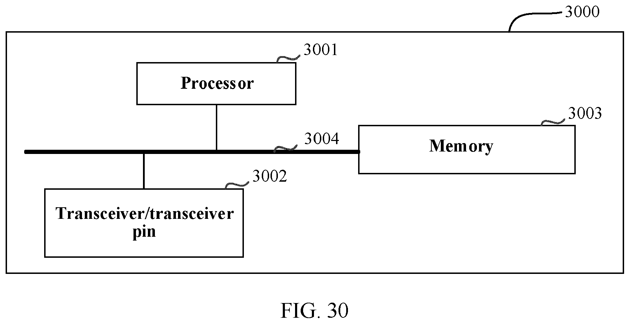

In one example, FIG. 30 is a schematic block diagram of an apparatus 3000 according to an embodiment of this application. The apparatus 3000 may include: a processor 3001 and a transceiver/transceiver pin 3002, and optionally, further include a memory 3003.

Components of the apparatus 3000 are coupled by using the bus 3004. The bus 3004 further includes a power supply bus, a control bus, and a status signal bus in addition to a data bus. However, for the purpose of clear descriptions, various buses are all referred to as the bus 3004 in the figure.

Optionally, the memory 3003 may be configured for instructions in the foregoing method embodiment. The processor 3001 may be configured to execute the instructions in the memory 3003 and control a receive pin to receive a signal and a transmit pin to send the signal.

The apparatus 3000 may be an electronic device or a chip of an electronic device in the above method embodiment.

All related content of the steps in the foregoing method embodiments may be referenced for the function descriptions of the corresponding functional modules. Details are not described herein again.

This embodiment further provides a computer storage medium. The computer storage medium stores computer instructions. The computer instructions, when run on an electronic device, cause the electronic device to perform steps of the above relevant methods to implement the fingerprint input methods in the above embodiments.

This embodiment further provides a computer program product. The computer program product, when run on a computer, causes the computer to perform the above relevant steps to implement the fingerprint input methods in the above embodiments.

In addition, an embodiment of this application further provides an apparatus. The apparatus may specifically be a chip, an assembly or a module. The apparatus may include a processor and a memory connected to each other. The memory is configured to store computer-executable instructions. When the apparatus operates, the processor may execute the computer-executable instructions stored in the memory to cause a chip to perform the fingerprint input methods in the above method embodiments.

The electronic device, the computer storage medium, the computer program product, or the chip provided in this embodiment is configured to perform the corresponding method provided above. Therefore, for beneficial effects that the method for managing a media file in a managed device, the computer storage medium, or the computer program product can achieve, reference may be made to beneficial effects of the corresponding method provided above, and details are not described herein again.

Through the descriptions of the foregoing implementations, a person skilled in the art may understand that, for the purpose of convenient and brief description, only division of the foregoing functional modules is used as an example for description. In actual application, the foregoing functions may be allocated to and completed by different functional modules according to requirements. That is, an internal structure of an apparatus is divided into different functional modules to complete all or some of the functions described above.

In the several embodiments provided in this application, it should be understood that the disclosed apparatus and method may be implemented in other manners. For example, the described apparatus embodiment is merely an example. For example, the module or unit division is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected according to actual needs to achieve the objectives of the solutions of the embodiments.

In addition, functional units in the embodiments of this application may be integrated into one processing unit, or each of the units may exist alone physically, or two or more units may be integrated into one unit. The integrated unit may be implemented in a form of hardware, or may be implemented in a form of a software functional unit.

Any content of each embodiment of this application and any content of the same embodiment can be freely combined. Any combination of the above falls within the scope of this application.

When the integrated unit is implemented in the form of a software functional unit and sold or used as an independent product, the integrated unit may be stored in a readable storage medium. Based on such an understanding, the technical solutions in the embodiments of this application essentially, or the part contributing to the prior art, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

Although embodiments of this application have been described above with reference to the accompanying drawings, this application is not limited to the specific implementations described above, and the specific implementations described above are merely exemplary and not limitative. A person of ordinary skill in the art may make various variations under the enlightenment of this application without departing from the spirit of this application and the protection scope of the claims, and such variations shall all fall within the protection scope of this application.

Methods or algorithm steps described in combination with the content disclosed in the embodiments of this application may be implemented by hardware, or may be implemented by a processor by executing a software instruction. The software instruction may include a corresponding software module. The software module may be stored in a random access memory (Random Access Memory, RAM), a flash memory, a read-only memory (Read Only Memory, ROM), an erasable programmable read only memory (Erasable Programmable ROM, EPROM), an electrically erasable programmable read only memory (Electrically EPROM, EEPROM), a register, a hard disk, a mobile hard disk, a compact disc read-only memory (CD-ROM), or a storage medium in any other forms well-known in the art. For example, a storage medium is coupled to a processor, so that the processor can read information from the storage medium or write information into the storage medium. Certainly, the storage medium may be a component of the processor. The processor and the storage medium may be located in the ASIC.

A person skilled in the art should be aware that in the one or more examples, the functions described in the embodiments of this application may be implemented by using hardware, software, firmware, or any combination thereof. When implemented by using software, the functions can be stored in a computer-readable medium or can be used as one or more instructions or code in a computer-readable medium for transferring. The computer-readable medium includes a computer storage medium and a communications medium, where the communications medium includes any medium that enables a computer program to be transmitted from one place to another. The storage medium may be any available medium accessible to a general-purpose or dedicated computer.

Although embodiments of this application have been described above with reference to the accompanying drawings, this application is not limited to the specific implementations described above, and the specific implementations described above are merely exemplary and not limitative. A person of ordinary skill in the art may make various variations under the enlightenment of this application without departing from the spirit of this application and the protection scope of the claims, and such variations shall all fall within the protection scope of this application.

## Claims

1. An electronic device, comprising:
one or more processors, a memory, and a fingerprint sensor;
and one or more computer programs, wherein the one or more computer programs are stored on the memory, and the computer programs, when executed by the one or more processors, cause the electronic device to perform the following steps:
displaying a new fingerprint interface in response to a first user operation received;
acquiring first fingerprint information in a case that a first part of a finger detected by the fingerprint sensor overlies a fingerprint sensing region;
displaying a fingerprint pattern of a first region in a fingerprint display region according to the first fingerprint information to indicate that a fingerprint of the first part of the finger has been inputted;
acquiring second fingerprint information in a case that a second part of the finger detected by the sensor overlies the fingerprint sensing region; the first fingerprint information being different from the second fingerprint information;
displaying a fingerprint pattern of a second region in the fingerprint display region according to the second fingerprint information to indicate that a fingerprint of the second part of the finger has been inputted; the first region being different from the second region; and
registering a fingerprint of the finger based on the first fingerprint information and the second fingerprint information.

2. The electronic device according to claim 1, wherein a display screen of the electronic device comprises one or more fingerprint sensing regions.

3. The electronic device according to claim 2, wherein the new fingerprint interface comprises images of the one or more fingerprint sensing regions.

4. The electronic device according to claim 1, wherein a size of the fingerprint sensing region is smaller than or equal to that of a display screen of the electronic device.

5. The electronic device according to claim 1, wherein, during the displaying a new fingerprint interface, the computer programs, when executed by the one or more processors, cause the electronic device to perform the following step:
displaying an image of the fingerprint display region in the new fingerprint interface.

6. The electronic device according to claim 1, wherein, after the acquiring second fingerprint information in a case that a second part of the finger detected by the sensor overlies the fingerprint sensing region, the computer programs, when executed by the one or more processors, cause the electronic device to perform the following step:
displaying an image of the fingerprint display region in the new fingerprint interface, and displaying the fingerprint pattern of the first region in the image of the fingerprint display region.

7. The electronic device according to claim 5 or 6, wherein the image of the fingerprint display region comprises a border.

8. The electronic device according to claim 5 or 6, wherein the image of the fingerprint display region comprises a set background color, the set background color being the same as or different from a background color of the new fingerprint interface.

9. The electronic device according to claim 8, wherein the image of the fingerprint display region is in a shape of an oval.

10. The electronic device according to claim 1, wherein the fingerprint sensor is an under-screen fingerprint sensor.

11. The electronic device according to claim 1, wherein the computer programs, when executed by the one or more processors, cause the electronic device to perform the following steps:
a display prompt box comprising a confirm option and a cancel option; and
registering the fingerprint of the finger in response to a received operation of tapping the confirm option by a user.

12. The electronic device according to claim 11, wherein the computer programs, when executed by the one or more processors, cause the electronic device to perform the following step:
saving fingerprint identification information and the fingerprint of the finger correspondingly.

13. An electronic device, comprising:
one or more processors, a memory, and a fingerprint sensor;
and one or more computer programs, wherein the one or more computer programs are stored on the memory, and the computer programs, when executed by the one or more processors, cause the electronic device to perform the following steps:
displaying a new fingerprint interface in response to a first user operation received;
acquiring first fingerprint information in a case that a first part of a finger detected by the fingerprint sensor overlies a fingerprint sensing region;
displaying an image of a fingerprint display region, the image of the fingerprint display region comprising a fingerprint pattern;
changing a background of a first region in the image of the fingerprint display region according to the first fingerprint information to indicate that a fingerprint of the first part of the finger has been inputted;
acquiring second fingerprint information in a case that a second part of the finger detected by the sensor overlies the fingerprint sensing region; the first fingerprint information being different from the second fingerprint information;
changing a background of a second region in the image of the fingerprint display region according to the second fingerprint information to indicate that a fingerprint of the second part of the finger has been inputted; the first region being different from the second region; and
registering a fingerprint of the finger based on the first fingerprint information and the second fingerprint information.

14. The electronic device according to claim 13, wherein a display screen of the electronic device comprises one or more fingerprint sensing regions.

15. The electronic device according to claim 14, wherein the new fingerprint interface comprises images of the one or more fingerprint sensing regions.

16. The electronic device according to claim 13, wherein a size of the fingerprint sensing region is smaller than or equal to that of a display screen of the electronic device.

17. The electronic device according to claim 13, wherein the image of the fingerprint display region comprises a border.

18. The electronic device according to claim 13, wherein the image of the fingerprint display region comprises a set background color, the set background color being the same as or different from a background color of the new fingerprint interface.

19. The electronic device according to claim 13, wherein the image of the fingerprint display region is in a shape of an oval.

20. The electronic device according to claim 13, wherein the fingerprint sensor is an under-screen fingerprint sensor.

21. The electronic device according to claim 13, wherein the computer programs, when executed by the one or more processors, cause the electronic device to perform the following step:
displaying a prompt box comprising a confirmation option and a cancel option; and
registering the fingerprint of the finger in response to a received operation of clicking the confirmation option by a user.

22. The electronic device according to claim 21, wherein the computer programs, when executed by the one or more processors, cause the electronic device to perform the following step: saving fingerprint identification information and the fingerprint of the finger correspondingly.

23. A fingerprint input method, comprising:
displaying, by an electronic device, a new fingerprint interface in response to a first user operation received;
acquiring, by the electronic device, first fingerprint information in a case that a first part of a finger detected by the fingerprint sensor overlies a fingerprint sensing region;
displaying, by the electronic device, a fingerprint pattern of a first region in a fingerprint display region according to the first fingerprint information to indicate that a fingerprint of the first part of the finger has been inputted;
acquiring, by the electronic device, second fingerprint information in a case that a second part of the finger detected by the sensor overlies the fingerprint sensing region; the first fingerprint information being different from the second fingerprint information;
displaying, by the electronic device, a fingerprint pattern of a second region in the fingerprint display region according to the second fingerprint information to indicate that a fingerprint of the second part of the finger has been inputted; the first region being different from the second region; and
registering, by the electronic device, a fingerprint of the finger based on the first fingerprint information and the second fingerprint information.

24. The method according to claim 23, wherein a display screen of the electronic device comprises one or more fingerprint sensing regions.

25. The method according to claim 24, wherein the new fingerprint interface comprises images of the one or more fingerprint sensing regions.

26. The method according to claim 23, wherein a size of the fingerprint sensing region is smaller than or equal to that of a display screen of the electronic device.

27. The method according to claim 23, wherein the displaying a new fingerprint interface comprises:
displaying an image of the fingerprint display region in the new fingerprint interface.

28. The method according to claim 23, wherein the displaying a fingerprint pattern of a first region in a fingerprint display region according to the first fingerprint information comprises:
displaying an image of the fingerprint display region in the new fingerprint interface, and displaying the fingerprint pattern of the first region in the image of the fingerprint display region.

29. The method according to claim 27 or 28, wherein the image of the fingerprint display region comprises a border.

30. The method according to claim 27 or 28, wherein the image of the fingerprint display region comprises a set background color, the set background color being the same as or different from a background color of the new fingerprint interface.

31. The method according to claim 30, wherein the image of the fingerprint display region is in a shape of an oval.

32. The method according to claim 23, wherein the fingerprint sensor is an under-screen fingerprint sensor.

33. The method according to claim 23, wherein the registering a fingerprint of the finger comprises:
displaying a prompt box comprising a confirmation option and a cancel option; and
registering the fingerprint of the finger in response to a received operation of clicking the confirmation option by a user.

34. The electronic device according to claim 33, wherein the registering a fingerprint of the finger comprises:
saving fingerprint identification information and the fingerprint of the finger correspondingly.

35. A fingerprint input method, comprising:
displaying, by an electronic device, a new fingerprint interface in response to a first user operation received;
acquiring, by the electronic device, first fingerprint information in a case that a first part of a finger detected by the fingerprint sensor overlies a fingerprint sensing region;
displaying, by the electronic device, an image of a fingerprint display region, the image of the fingerprint display region comprising a fingerprint pattern;
changing, by the electronic device, a background of a first region in the image of the fingerprint display region according to the first fingerprint information to indicate that a fingerprint of the first part of the finger has been inputted;
acquiring, by the electronic device, second fingerprint information in a case that a second part of the finger detected by the sensor overlies the fingerprint sensing region; the first fingerprint information being different from the second fingerprint information;
changing, by the electronic device, a background of a second region in the image of the fingerprint display region according to the second fingerprint information to indicate that a fingerprint of the second part of the finger has been inputted; the first region being different from the second region; and
registering, by the electronic device, a fingerprint of the finger based on the first fingerprint information and the second fingerprint information.

36. The method according to claim 35, wherein a display screen of the electronic device comprises one or more fingerprint sensing regions.

37. The method according to claim 36, wherein the new fingerprint interface comprises images of the one or more fingerprint sensing regions.

38. The method according to claim 35, wherein a size of the fingerprint sensing region is smaller than or equal to that of a display screen of the electronic device.

39. The method according to claim 35, wherein the image of the fingerprint display region comprises a border.

40. The method according to claim 35, wherein the image of the fingerprint display region comprises a set background color, the set background color being the same as or different from a background color of the new fingerprint interface.

41. The method according to claim 35, wherein the image of the fingerprint display region is in a shape of an oval.

42. The method according to claim 35, wherein the fingerprint sensor is an under-screen fingerprint sensor.

43. The method according to claim 35, wherein the registering a fingerprint of the finger comprises:
displaying a prompt box comprising a confirmation option and a cancel option; and
registering the fingerprint of the finger in response to a received operation of clicking the confirmation option by a user.

44. The method according to claim 43, wherein the registering a fingerprint of the finger comprises:
saving fingerprint identification information and the fingerprint of the finger correspondingly.

45. A computer-readable storage medium, comprising a computer program, wherein the computer program, when run on an electronic device, causes the electronic device to perform the fingerprint input method according to any one of claims 23 to 34.

46. A computer-readable storage medium, comprising a computer program, wherein the computer program, when run on an electronic device, causes the electronic device to perform the fingerprint input method according to any one of claims 35 to 44.
